# EUROPEAN PATENT SPECIFICATION

(11) **EP 1 930 375 B1**
(45) Date of publication and mention of the grant of the patent: **04.07.2012**
(21) Application number: 06798386.6
(22) Date of filing: 27.09.2006
(51) Int. Cl.: C08L 101/10, C08K 5/098, C08K 5/5415, C08K 5/09, C08K 5/17, C09K 3/10

(54) **CURABLE COMPOSITION IMPROVED IN CURABILITY AND ADHESIVENESS**
HÄRTBARE ZUSAMMENSETZUNG MIT VERBESSERTER HÄRTBARKEIT UND VERBESSERTEM HAFTVERMÖGEN
COMPOSITION POUVANT ETRE DURCIE AMELIOREE DANS SA CAPACITE DE DURCISSEMENT ET DANS SON ADHESIVITE

(30) Priority: 30.09.2005 JP 2005289015
(43) Date of publication of application: 11.06.2008
(73) Proprietor: Kaneka Corporation, Osaka-shi, Osaka 530-8288 (JP)
(72) Inventor: OKAMOTO, Toshihiko, Takasago-shi, Hyogo 676-8688 (JP); WAKABAYASHI, Katsuyu, Settsu-shi, Osaka 566-0072 (JP)
(74) Representative: HOFFMANN EITLE
(86) International application number: PCT/JP2006/319190
(87) International publication number: WO 2007/040124

(56) References cited:
- WO-A1-03/014226
- WO-A1-2004/031299
- WO-A1-2004/031300
- JP-A- 09 151 322
- JP-A- 60 215 058
- JP-A- 2000 345 054
- JP-A- 2005 336 401

## Description

### TECHNICAL FIELD

The present invention relates to a curable composition comprising an organic polymer containing a silicon-containing group (hereinafter referred to also as "reactive silyl group") having a hydroxyl or hydrolysable group bound to a silicon atom and capable of crosslinking by siloxane bond formation.

### BACKGROUND ART

It has been known that an organic polymer comprising at least one reactive silicon-containing group in one molecule has a property of crosslinking by forming a siloxane bond accompanied with, for example, hydrolysis of a reactive silicon group due to water etc. at a room temperature and accordingly giving a rubber-like cured product.

With respect to the reactive silicon group-containing organic polymer, an organic polymer having a polyoxyalkylene or polyisobutylene main chain skeleton is disclosed in Patent Documents 1 and 2 and the like and has already been produced industrially and used widely for uses as a sealant, an adhesive, paint and the like.

The curable composition comprising a reactive silyl group-containing organic polymer is cured using a silanol condensation catalyst and an organotin catalyst having a carbon-tin bond, such as dibutyltin bis(acetylacetonate), is widely used in the case of the one-pack curable composition. However, recently, the toxicity of the organotin compound is pointed out.

On the other hand, as described in Patent Document 3, Patent Document 4, Patent Document 5, and Patent Document 6, a stannous carboxylate is used as a curing catalyst other than organotin catalysts, generally as a silanol condensation catalyst for a two-pack curable composition. Patent Documents 7, Patent Document 8, Patent Document 9, Patent Document 10, Patent Document 11, Patent Document 12, Patent Document 13, Patent Document 14, Patent Document 15, Patent Document 16, Patent Document 17, Patent Document 18 and Patent Document 20 disclose techniques of using various kinds of carboxylic acid metal salts or carboxylic acids as a silanol condensation catalyst. However, when catalysts comprising those carboxylic acid metal salts or carboxylic acids described in the above-cited Patent Documents are used, the resulting compositions are inferior in curability and further tend to be somewhat inferior in adhesion as compared with the use of organotin catalysts.

On the other hand, there are very few examples of the addition of a halogen atom-containing silicon compound to a curable composition comprising a reactive silyl group-containing organic polymer; Patent Document 19 describes a technology of improving the storage stability by addition of a silicon compound containing a nitrogen atom- or halogen atom-containing alkyl group on the carbon atom in the position α to the silicon atom. The above-cited Patent Document, however, has no specific description about the carboxylic acid metal salt or carboxylic acid as a silanol condensation catalyst.
Patent Document 1: Japanese Kokai Publication Sho-52-73998
Patent Document 2: Japanese Kokai Publication Sho-59-74149
Patent Document 3: Japanese Kokai Publication Sho-55-9669
Patent Document 4: Japanese Patent No. 3062626
Patent Document 5: Japanese Kokai Publication Hei-6-322251
Patent Document 6: Japanese Kokai Publication 2002-285018
Patent Document 7: Japanese Kokai Publication Hei-5-117519
Patent Document 8: Japanese Kokai Publication Hei-8-41358
Patent Document 9: Japanese Kokai Publication Hei-5-39428
Patent Document 10: Japanese Kokai Publication 2001-342363
Patent Document 11: Japanese Kokai Publication 2000-313814
Patent Document 12: Japanese Kokai Publication 2003-147220
Patent Document 13: Japanese Kokai Publication 2000-345054
Patent Document 14: U.S. Patent No. 6410640
Patent Document 15: Japanese Kokai Publication 2003-206410
Patent Document 16: International Publication WO04/031299
Patent Document 17: International Publication WO04/031300
Patent Document 18: International Publication WO04/099318
Patent Document 19: International Publication WO03/014226
Patent Document 20: JP 2005 336401

### SUMMARY OF THE INVENTION

It is an object of the present invention to provide a curable composition which comprises, as a principal component, an organic polymer containing a silicon-containing group capable of crosslinking by siloxane bond formation and in which a non-organotin catalyst is used to attain both good curability and good adhesion.

The present inventors made intensive investigations in an attempt to solve such problems and, as a result, found that when a carboxylic acid metal salt and/or a carboxylic acid (B) is used as a silanol condensation catalyst for the above-mentioned polymer and a halogen atom-containing silicon compound (C) having a specific structure is further used, a curable composition excellent in curability and adhesion can be obtained. Based on such finding, the present invention has been completed.

Thus, the invention relates to
a curable composition
which comprises
(A) an organic polymer containing a silicon-containing group capable of crosslinking by siloxane bond formation,
(B) a carboxylic acid metal salt (b1) and/or a carboxylic acid (b2) and
(C) a halogen atom-containing silicon compound represented by the general formula (1) :

   R¹_{4-a-b}YₐSi (OR²)_{b} (1)

   (wherein 4-a-b R¹s each independently is a substituted or unsubstituted hydrocarbon group containing 1 to 20 carbon atoms or a triorganosiloxy group represented by (R")₃SiO- (in which three R"s each independently is a substituted or unsubstituted hydrocarbon group containing 1 to 20 carbon atoms); a Ys each independently is a halogen atom or an alkyl group containing 1 to 20 carbons atoms and having a halogen atom on the carbon atom in the position α or β to the silicon atom; b R²s each independently is a hydrogen atom or a substituted or unsubstituted hydrocarbon group containing 1 to 20 carbon atoms; a is 1, 2 or 3, b is 1, 2 or 3, and a+b is 2, 3 or 4) and/or a partial hydrolysis condensate derived from a halogen atom-containing silicon compound represented by the general formula (1).

Preferably, the component (B) contains either of the carboxylic acid metal salt (b1) or the carboxylic acid (b2).

Preferably, the component (B) contains both of the carboxylic acid metal salt (b1) and the carboxylic acid (b2).

Preferably, the carboxylic acid metal salt (b1) is a metal salt of a carboxylic acid of which the carbon atom adjacent to the carbonyl group composing a carboxylate ion is a tertiary carbon or a quaternary carbon.

Preferably, the carboxylic acid (b2) is the carboxylic acid of which the carbon atom adjacent to the carbonyl group composing an acid group is a tertiary carbon or a quaternary carbon.

Preferably, the main chain skeleton of the organic polymer (A) is a polyoxyalkylene polymer.

Preferably, each modification of composition further contains an amine compound as the component (D).

In the following, the present invention is described in detail.

### DETAILED DESCRIPTION OF THE INVENTION

The main chain skeleton of the organic polymer having a silicon-containing group capable of crosslinking by siloxane bond formation, which is to be used in accordance with the present invention, is not particularly restricted but may be any of various main chain skeletons.

In particular, there may be mentioned polyoxyalkylene polymers such as polyoxyethylene, polyoxypropylene, polyoxybutylene, polyoxytetramethylene, polyoxyethylene-polyoxypropylene copolymer, and polyoxypropylene-polyoxybutylene copolymer; hydrocarbon polymers such as ethylene-propylene copolymer, polyisobutylene, isobutylene-isoprene and the like copolymer, polychloroprene, polyisoprene, copolymer of isoprene or butadiene with acrylonitrile and/or styrene etc., polybutadiene, copolymer of isoprene or butadiene with acrylonitrile and styrene etc., and hydrogenated polyolefin copolymers obtained by hydrogenation of these polyolefin polymers; polyester polymers such as condensation polymers of dibasic acid such as adipic acid and glycol and ring-opening polymers of lactones; (meth) acrylic ester polymers obtained by radical polymerization of monomers such as ethyl (meth) acrylate and butyl (meth)acrylate etc.; vinyl polymers obtained by radical polymerization of monomers such as (meth)acrylic ester monomers, vinyl acetate, acrylonitrile and styrene etc.; graft polymers obtained by polymerization of vinyl monomers in the above-mentioned organic polymers; polysulfide polymers; polyamide polymers such as nylon 6 obtained by ring opening polymerization of ε-caprolactam, nylon 6,6 obtained by condensation polymerization of hexamethylenediamine and adipic acid, nylon 6,10 obtained by condensation polymerization of hexamethylenediamine and sebacic acid, nylon 11 obtained by condensation polymerization of ε-aminoundecanoic acid, nylon 12 obtained by ring-opening polymerization of ε-aminolaurolactam, and copolymer nylon comprising two or more components of the above-mentioned nylons; polycarbonates produced by condensation polymerization of bisphenol A and carbonyl chloride etc.; diallyl phthalate polymers; and the like.

Among them, saturated hydrocarbon polymers such as polyisobutylene, hydrogenated polyisoprene, and hydrogenated polybutadiene, polyoxyalkylene polymers, and (meth)acrylic ester polymers are more preferable since they have relatively low glass transition temperature and give cured products excellent in cold resistance.

The glass transition temperature of the organic polymer as the component (A) is not particularly limited, however it is preferably 20°C or lower, more preferably 0°C or lower, and further preferably -20°C or lower. If the glass transition temperature exceeds 20°C, the viscosity is higher in winter and in a cold area and the workability may be worsened in some cases and the cured product may be deteriorated in flexibility and elongation in some cases. The glass transition temperature is a value measured by DSC measurement.

Also, polyoxyalkylene polymers and (meth)acrylic ester polymers are particularly preferable since they have high moisture permeability and give excellent deep part curability and adhesion in the case where they are used for a one-pack composition and polyoxyalkylene polymers are most preferable.

The silicon-containing group capable of crosslinking by siloxane bond formation to be contained in the organic polymer (A) is a group having a hydroxyl or hydrolysable group bonded to a silicon atom and capable of crosslinking by forming a siloxane bond by reaction accelerated by a silanol condensation catalyst. The silicon-containing group capable of crosslinking by siloxane bond formation may include a group represented by the general formula (2):

-SiR³_{3-c}X_{c} (2)

(wherein R³ independently represents an alkyl group having 1 to 20 carbon atoms, an aryl group having 6 to 20 carbon atoms, an aralkyl group having 7 to 20 carbon atoms, or a triorganosiloxy group defined as (R')₃SiO- (respective substituents R' are independently a substituted or unsubstituted hydrocarbon group having 1 to 20 carbon atoms) ; respective substituents X independently represent a hydroxyl or hydrolysable group; when there are two or more Xs, they may be the same or different; c denotes 0, 1, 2, or 3).

The hydrolysable group is not particularly limited and may include any conventionally known hydrolysable group. In particular, examples include a hydrogen atom, a halogen atom, an alkoxy, acyloxy, ketoxymate, amino, amido, acid amido, aminoxy, mercapto, alkenyloxy, and the like groups. Among them, a hydrogen atom, an alkoxy, acyloxy, keoxymate, amino, amido, aminoxy, mercapto, and alkenyloxy groups are preferable and in terms of moderate hydrolysability and handling easiness, an alkoxy group is particularly preferable.

One to three hydrolysable groups and hydroxyl groups may be bonded to one silicon atom, and two or three of those groups may be preferably bonded to one silicon atom from the curability viewpoint. In the case where two or more hydrolysable groups and hydroxyl groups are bonded to a silicon atom, they may be same or different. Silicon-containing groups having three hydroxyl and/or hydrolyzable groups on the silicon atom and capable of crosslinking by siloxane bond formation are preferred since, when they are used, high activity and good curability can be attained and, further, the resulting cured products are excellent in recovery, durability and creep resistance. On the other hand, silicon-containing groups having two hydroxyl and/or hydrolyzable groups on the silicon atom and capable of crosslinking by siloxane bond formation are preferred from the viewpoint that good storage stability can be attained and that the cured products obtained show high elongation and high strength.

Specific examples of R³ in the above-mentioned general formula (2) are alkyl groups such as methyl group and ethyl group; cycloalkyl groups such as cyclohexyl group; aryl groups such as phenyl group; aralkyl groups such as benzyl group; and triorganosiloxy groups defined as (R')₃SiO- (wherein R' denotes methyl, phenyl, or the like group). Among them, methyl group is particularly preferable.

Specific examples of the silicon-containing group capable of crosslinking by siloxane bond formation include trimethoxysilyl group, triethoxysilyl group, triisopropoxysilyl group, dimethoxymethylsilyl group, diethoxymethylsilyl group, and diisopropoxymethylsilyl group. Trimethoxysilyl group, triethoxysilyl group, and dimethoxymethylsilyl group are preferable, and trimethoxysilyl group is particularly preferable, since high activity and good curability can be obtained. From a viewpoint of storage stability, dimethoxymethylsilyl group is particularly preferable. Triethoxysilyl group and diethoxymethylsilyl group are particularly preferable since the alcohol to be produced by hydrolysis of the silicon-containing group capable of crosslinking by siloxane bond formation is ethanol and thus it is more safe.

Introduction of the silicon-containing group capable of crosslinking by siloxane bond formation may be carried out by a conventionally known method. That is, the following methods may be employed.
(A) An organic polymer having an unsaturated group is obtained by causing reaction of an organic polymer having a functional group such as a hydroxyl group in a molecule with an organic compound having an active group reactive on the functional group and an unsaturated group. Alternatively, the organic polymer having an unsaturated group is obtained by copolymerization with an unsaturated group-containing epoxy compound. Successively, hydrosilylation is carried out by causing reaction of a hydrosilane having a silicon-containing group capable of crosslinking by siloxane bond formation on the obtained reaction product.
(B) A compound having a mercapto group and a silicon-containing group capable of crosslinking by siloxane bond formation is reacted with the organic polymer having an unsaturated group obtained in the same manner as the method (A) .
(C) An organic polymer having a functional group such as a hydroxyl group, an epoxy group, and an isocyanate group in a molecule is reacted with a compound having a functional group reactive on the functional group and a silicon-containing group capable of crosslinking by siloxane bond formation.

The method described as the method (A) and the method of causing reaction of a polymer having a terminal hydroxyl group and a compound having an isocyanate group and a silicon-containing group capable of crosslinking by siloxane bond formation in the method (C) are preferable among the above-exemplified methods since they are suitable of achieving high conversion efficiency in a relatively short reaction time. The organic polymer having a silicon-containing group capable of crosslinking by siloxane bond formation obtained by the method (A) can give a curable composition with lower viscosity and better workability than the organic polymer obtained by the method (C) and the organic polymer obtained by the method (B) has strong odor due to the mercaptosilane and accordingly, the method (A) is particularly preferable.

Specific examples of the hydroxysilane compound to be used in the method (A) include halogenated silanes such as trichlorosilane, methyldichlorosilane, dimethylchlorosilane, and phenyldichlorosilane; alkoxysilanes such as trimethoxysilane, triethoxysilane, methyldiethoxysilane, methyldimethoxysilane, phenyldimethoxysilane and 1-[2-(trimethoxysilyl)ethyl]-1,1,3,3-tetramethyldisiloxane; acyloxysialnes such as methyldiacetoxysilane and phenyldiacetoxysilane; ketoximatosilanes such as bis(dimethylketoximato)methylsilane and bis(cyclohexylketoximato)methylsilane; and the like, but the examples thereof are not limited to them. Among them, halogenated silanes and alkoxysilanes are preferable and alkoxysilanes are particularly preferable since the curable composition to be obtained has moderate hydrolysability and is easy to handle. Among the alkoxysilanes, methyldimethylsilane is particularly preferable since it is easily available and the curable composition comprising the organic polymer to be obtained therefrom is excellent in the curability, storage stability, elongation property, and tensile strength. Trimethoxysilane is particularly preferable from the viewpoint of excellent curability and recovery of the cured product to be obtained.

As the synthesis method (B), there may be mentioned, for example, a method of introducing a compound having a mercapto group and a silicon-containing group capable of crosslinking by siloxane bond formation into an unsaturated bond site of an organic compound by radical addition reaction in the presence of a radical initiator and/or a radical generation source, however it is not particularly limited. Specific examples of the compound having a mercapto group and a silicon-containing group capable of crosslinking by siloxane bond formation include γ-mercaptopropyltrimethoxysilane, γ-mercaptopropylmethyldimethoxysilane, γ-mercaptopropyltriethoxysilane, γ-mercaptopropylmethyldiethoxysilane, mercaptomethyltrimethoxysilane, mercaptomethyltriethoxysilane and the like, but are not limited to them.

A method for causing reaction of a polymer having a terminal hydroxyl group and a compound having an isocyanate group and a silicon-containing group capable of crosslinking by siloxane bond formation as the synthesis method (C) may be, for example, the method disclosed in the Japanese Kokai Publication Hei-3-47825, however the method is not particularly limited. Specific examples of the compound having an isocyanate group and a reactive silyl group include γ-isocyanatopropyltrimethoxysilane, γ-isocyanatopropylmethyldimethoxysilane, γ-isocyanatopropyltriethoxysilane, γ-isocyanatopropylmethyldiethoxysilane, isocyanatomethyltrimethoxysilane, isocyanatomethyltriethoxysilane, isocyanatomethyldimethoxymethylsilane, isocyanatomethyldiethoxymethylsilane and the like, but are not limited to them.

In the case of using a silane compound such as trimethoxysilane having three hydrolysable groups bonded to one silicon atom, disproportionation reaction is sometimes promoted. If the disproportionation reaction is promoted, a rather harmful compound such as dimethoxysilane and tetrahydrosilane is generated. However in the case of using γ-mercaptopropyltrimethoxysilane or γ-isocyanatopropyltrimethoxysilane, such disproportionation reaction is not promoted. Therefore, the synthesis method (B) or (C) is preferablly employed in the case where a group such as trimethoxysilyl having three hydrolysable groups bonded to one silicon atom is used as the silicon-containing group.

On the other hand, the silane compound represented by the general formula (3):

H-(SiR⁴₂O)ₘSiR⁴₂-R⁵-SiX₃ (3)

[wherein X is as defined above, the (2 x m + 2) R⁴ groups each independently is a hydrocarbon group or a triorganosiloxy group represented by -OSi(R")₃ (in which each R" independently is a substituted or unsubstituted hydrocarbon group containing 1 to 20 carbon atoms), preferably a hydrocarbon group containing 1 to 20 carbon atoms from the availability and cost viewpoint, more preferably a hydrocarbon group containing 1 to 8 carbon atoms, particularly preferably a hydrocarbon group containing 1 to 4 carbon atoms, R⁵ is a divalent organic group, preferably a divalent hydrocarbon group containing 1 to 12 carbon atoms from the availability and cost viewpoint, more preferably a divalent hydrocarbon group containing 2 to 8 carbon atoms, particularly preferably a divalent hydrocarbon group containing 2 carbon atoms, and m is an integer of 0 to 19, preferably 1 from the availability and cost viewpoint] do not undergo disproportionation. Therefore, the use of a silane compound represented by the general formula (3) is preferred in introducing a group containing a silicon atom with three hydrolyzable groups bound thereto according to the synthetic method (A). Specific examples of the silane compound represented by the general formula (3) are 1-[2-(trimethoxysilyl)ethyl]-1,1,3,3-tetramethyldisiloxane, 1-[2-(trimethoxysilyl)propyl]-1,1,3,3-tetramethyldisiloxane, and 1-[2-(trimethoxysilyl)hexyl]-1,1,3,3-tetramethyldisiloxane.

The organic polymer having a silicon-containing group capable of crosslinking by siloxane bond formation may have a linear or branched structure and the polymer has preferably a number average molecular weight on the basis of conversion into polystyrene by GPC in a range from 500 to 100,000, more preferably in a range from 1,000 to 50,000, and further preferably in a range from 3,000 to 30,000. If the number average molecular weight is lower than 500, the cured product tends to be undesirable in terms of the elongation property of the cured product and if it exceeds 100,000, the workability tends to become undesirable because of high viscosity. The number average molecular weight can be measured as values on the polystyrene equivalent basis using, for example, the following:
Pumping system: Tosoh HLC-8120 GPC;
Column: Tosoh TSK-GEL H type;
Solvent: THF.
The measurement method is not particularly restricted.

To obtain a rubber-like cured product with high strength, high elongation and low modulus of elasticity, the number of silicon-containing groups capable of crosslinking by siloxane bond formation contained per one molecule of the organic polymer is at least one and more preferably 1.1 to 5 on average. If the number of silicon-containing groups capable of crosslinking by siloxane bond formation contained in a molecule on average is lower than 1, the curability becomes insufficient and it becomes difficult to obtain good rubber elastic behavior. The silicon-containing group capable of crosslinking by siloxane bond formation may be at either a terminus of the main chain or a terminus of a side chain of the organic polymer molecular chain or both. Particularly, in the case where the silicon-containing group capable of crosslinking by siloxane bond formation exists at a terminus of the main chain of the molecular chain, the effective mesh length of the organic polymer component contained in the cured product to be obtained finally is lengthened and it makes easy to obtain the rubber-like cured product having high strength, high elongation, and low modulus of elasticity.

The above-mentioned polyoxyalkylene polymer is substantially a polymer containing of a repeating unit represented by the general formula (4):

-R⁶-O- (4)

(wherein R⁶ represents a linear or branched alkylene group having 1 to 14 carbon atoms) and R⁶ in the general formula (4) is a linear or branched alkylene group having preferably 2 to 4 carbon atoms. Specific examples of the repeating unit represented by the general formula (4) are as follows; -CH₂O-, -CH₂CH₂O-, -CH₂CH(CH₃)O-, -CH₂CH(CH₂CH₅) O-, -CH₂C (CH₃)₂O-, -CH₂CH₂CH₂CH₂O-, and the like. The main chain skeleton of the polyoxyalkylene polymer may contain only one kind of repeating unit or two or more kinds of repeating units. Particularly, in the case of using it for a sealant etc., a polymer containing a propylene oxide polymer as a main component is preferable since it is amorphous and has a relatively low viscosity.

A synthesis method of the polyoxyalkylene polymer may include, for example, a polymerization method using an alkaline catalyst such as KOH, a polymerization method using a transition metal compound-porphyrin complex catalyst obtained by causing reaction of an organic aluminum compound and porphyrin as described in Japanese Kokai Publication Sho-61-215623, a polymerization method using a composite metal cyanide complex catalyst disclosed in Japanese Kokoku Publication Sho-46-27250, Japanese Kokoku Publication Sho-59-15336, U.S. Patent No. 3,278,457, U.S. Patent No. 3,278,458, U.S. Patent No. 3,278,459, U.S. Patent No. 3,427,256, U.S. Patent No. 3,427,334, and U.S. Patent No. 3,427,335 etc., a polymerization method using a catalyst containing a polyphosphazene salt exemplified in Japanese Kokai Publication Hei-10-273512, and a polymerization method using a catalyst containing a phosphazene compound exemplified in Japanese Kokai Publication Hei-11-060722, however it is not limited to these examples.

A production method of a polyoxyalkylene polymer having a silicon-containing group capable of crosslinking by siloxane bond formation may include those proposed in Japanese Kokoku Publication Sho-45-36319, Japanese Kokoku Publication Sho-46-12154, Japanese Kokai Publication Sho-50-156599, Japanese Kokai Publication Sho-54-6096, Japanese Kokai Publication sho-55-13767, Japanese Kokai Publication Sho-55-13468, Japanese Kokai Publication Sho-57-164123, Japanese Kokoku Publication Hei-3-2450, U.S. Patent No. 3,632,557, U.S. Patent No. 4,345,053, U. S. Patent No. 4,366,307, and U.S. Patent No. 4,960,844 etc., and also polyoxyalkylene polymers having a number average molecular weight of 6,000 or higher and a Mw/Mn ratio of 1.6 or lower and thus having high molecular weight and narrow molecular weight distribution as described in Japanese Kokai Publication Sho-61-197631, Japanese Kokai Publication Sho-61-215622, Japanese Kokai Publication Sho-61-215623, Japanese Kokai Publication Sho-61-218632, Japanese Kokai Publication Hei-3-72527, Japanese Kokai Publication Hei-3-47825, and Japanese Kokai Publication Hei-8-231707 can be exemplified, but not limited to these examples.

The above-mentioned polyoxyalkylene polymers having a silicon-containing group capable of crosslinking by siloxane bond formation may be used each alone or two or more of them may be used in combination.

The above-mentioned saturated hydrocarbon polymer is a polymer substantially having no unsaturated carbon-carbon bond other than aromatic ring and the polymer forming its skeleton may be obtained by (1) polymerizing, as a main monomer, an olefin compound having 2 to 6 carbon atoms such as ethylene, propylene, 1-butene, and isobutylene or (2) homopolymerizing a diene compound such as butadiene and isoprene and/or copolymerizing the above-mentioned olefin compound and successively hydrogenating the homopolymer or copolymer. An isobutylene polymer and a hydrogenated polybutadiene polymer are preferable since they are easy to be introduced with a functional group into a terminus thereof and be controled in the molecular weight, and they have possibility to have a large number of terminal functional groups, and an isobutylene polymer is particularly preferable.

Those having a saturated hydrocarbon polymer as a main skeleton are excellent in heat resistance, weather resistance, durability and moisture-shutting property.

The isobutylene polymer may consist of solely isobutylene unit for all monomer units and may be a copolymer of isobutylene unit and another monomer, however in terms of the rubber property, the polymer is preferable to consist of 50% by weight or more, more preferable to consist of 80% by weight or more, and further preferable to consist of 90 to 99% by weight, of a repeating unit derived from isobutylene.

Various kinds of polymerization methods have been reported so far as a synthesis method of the saturated hydrocarbon polymer and particularly in recent years, so-called living polymerization has been developed. In the case of the saturated hydrocarbon polymer, particularly the isobutylene polymer, it is known that the polymer is easy to be produced by employing inifer polymerization (J.P. Kennedy et al., J. Polymer Sci., Polymer Chem. Ed. vol. 15, p. 2843 (1997)) discovered by Kennedy et al.; that polymerization can be carried out to give a number average molecular weight in a range from 500 to 100,000 with molecular weight distribution of 1.5 or narrower; and that various kinds of functional groups may be introduced into the molecule termini.

Examples of the production method of the saturated hydrocarbon polymer having a silicon-containing group capable of crosslinking by siloxane bond formation may be, for example, the methods described in Japanese Kokoku Publication Hei-4-69659, Japanese Kokoku Publication Hei-7-108928, Japanese Kokai Publication Sho-63-254149, Japanese Kokai Publication Sho-64-22904, Japanese Kokai Publication Hei-1-197509, Patent pamphlet No. 2, 539, 445 and Patent pamphlet No. 2,873,395, and Japanese Kokai Publication Hei-7-53882, however the method is not limited to these exemplified methods.

The above-mentioned saturated hydrocarbon polymer having a silicon-containing group capable of crosslinking by siloxane bond formation may be used alone or two or more kinds of the polymer may be used in combination.

A (meth)acrylic ester monomer composing the main chain of the above-mentioned (meth)acrylic ester polymer is not particularly limited and various kinds of monomers may be used. Examples include (meth)acrylic acid monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, γ-(methacryloyloxypropyl)dimethoxymethylsilane, methacryloyloxymethyltrimethoxysilane, methacryloyloxymethyltriethoxysilane, methacryloyloxymethyldimethoxymethylsilane, methacryloyloxymethyldiethoxymethylsilane, (meth)acrylic acid ethylene oxide adduct, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, 2-perfluorohexadecylethyl (meth)acrylate and the like. With respect to the (meth) acrylic ester polymer, the following vinyl monomers can be copolymerized together with a (meth) acrylic ester monomer. Examples of the vinyl monomer are styrene monomers such as styrene, vinyltoluene, α-methylstyrene, chlorostyrene, styrenesulfonic acid and its salts; fluorine-containing vinyl monomers such as perfluoroethylene, perfluoropropylene, and vinylidene fluoride; silicon-containing vinyl monomers such as vinyltrimethoxysilane and vinyltriethoxysilane; maleic anhydride, maleic acid, and monoalkyl and dialkyl esters of maleic acid; fumaric acid, and monoalkyl and dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl monomers such as acrylonitrile and methacrylonitrile; amido group-containing vinyl monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; vinyl chloride, vinylidene chloride, ally chloride, and allyl alcohol; and the like. They may be used alone or a plurality of them may be copolymerized. Among them, in terms of the physical properties of a produced material, and the like, polymers comprising a styrene monomer and a (meth) acrylic acid monomer are preferable. (Meth) acrylic polymers comprising an acrylic ester monomer and a methacrylic ester monomer are more preferable and acrylic polymers comprising an acrylic ester monomer are further preferable. In the case of use for general construction and the like, since physical properties such as low viscosity of a mixture and low modulus, high elongation, weather resistance, and heat resistant of the cured product, and the like are required, a butyl acrylate monomer is more preferable. On the other hand, in the case of use for an automobile and the like for which oil-proofness etc. is required, an ethyl acrylate-based copolymer is more preferable. Since the polymer comprising mainly ethyl acrylate tends to be slightly inferior in low temperature properties (e.g. cold resistance) although having excellent oil-proofness, in order to improve the low temperature properties, a portion of ethyl acrylate may be replaced with butyl acrylate. However since the good oil-proofness is lowered as the ratio of butyl acrylate is increased, the ratio is preferablly suppressed to 40% or lower and more preferably to 30% or lower for use requiring the oil-proofness. Also, to improve the low temperature properties and the like without deterioration of the oil-proofness, 2-methoxyethyl acrylate, 2-ethoxyethyl acrylate and the like in which oxygen is introduced in an alkyl group in the side chain is preferably used. However, since introduction of an alkoxy group having an ether bond in the side chain tends to lower the heat resistance, the ratio is preferably adjusted to 40% or lower when heat resistance is needed. In accordance with the various uses and required aims, the required physical properties such as the oil-proofness, heat resistance, and low temperature properties should be considered and consequently, it is possible to adjust the ratio and obtain suitable polymers. For example, although it is not particularly limited, ethyl acrylate/butyl acrylate/2-methoxyethyl acrylate copolymer [(40 to 50)/(20 to 30) / (30 to 20) ratio by weight] can be exemplified as a polymer with good balance of the physical properties such as the oil-proofness, heat resistance, and low temperature properties. In the present invention, these preferable monomers may be copolymerized with other monomers and also block-copolymerized with them and in that case, these preferable monomers are preferably contained at a ratio of 40% by weight or higher. In the above descriptions, (meth)acrylic acid means acrylic acid and/or methacrylic acid.

A synthesis method of a (meth)acrylic ester polymer is not particularly limited and a conventionally known method may be employed. However, a polymer obtained by a common free radical polymerization method using an azo compound, a peroxide or the like as a polymerization initiator has a problem that the molecular weight distribution value is generally as high as 2 or higher and the viscosity is thus high. Accordingly, to obtain a (meth) acrylic ester polymer having a crosslinkable functional group at a terminus of molecular chain at a high ratio, and with narrow molecular weight distribution and low viscosity, a living radical polymerization method is preferably employed.

Among "living radical polymerization method", "atom transfer radical polymerization method" for polymerizing a (meth)acrylic ester monomer using an organic halide, a halogenated sulfonyl compound or the like as an initiator and a transition metal complex as a catalyst has, in addition to the characteristics of the above-mentioned "living radical polymerization methods", a wide range of the option of the initiator and the catalyst since a halogen etc. which is relatively advantageous for the functional group conversion reaction, and is therefore further preferable as a production method of the (meth)acrylic ester polymer having a specified functional group. Examples of the atom transfer radical polymerization method are, for example, the method described in Matyjaszewski et al., J. Am. Chem. Soc., vol. 117, p. 5614 (1995).

Examples of a production method of the (meth)acrylic ester polymer having a silicon-containing group capable of crosslinking by siloxane bond formation are, for example, production methods employing free radical polymerization methods using chain transfer agents and described in Japanese Kokoku Publication Hei-3-14068, Japanese Kokoku Publication Hei-4-55444, Japanese Kokai Publication Hei-6-211922, and the like. Also, a production method employing an atom transfer radical polymerization method is disclosed in Japanese Kokai Publication Hei-9-272714 and the like, however the method is not limited to these exemplified methods.

The above-mentioned (meth)acrylic ester polymers having a silicon-containing group capable of crosslinking by siloxane bond formation may be used alone or two or more kinds of them may be used in combination.

These organic polymers having a silicon-containing group capable of crosslinking by siloxane bond formation may be used alone or two or more of them may be used in combination. Practically, organic polymers obtained by blending two or more kinds of polymers selected from the group consisting of polyoxyalkylene polymers having a silicon-containing group capable of crosslinking by siloxane bond formation, saturated hydrocarbon polymers having a silicon-containing group capable of crosslinking by siloxane bond formation, and (meth)acrylic ester polymers having a silicon-containing group capable of crosslinking by siloxane bond formation may also be used.

Production methods of organic polymers by blending a polyoxyalkylene polymer having a silicon-containing group capable of crosslinking by siloxane bond formation and a (meth) acrylic ester polymer having a silicon-containing group capable of crosslinking by siloxane bond formation are proposed in Japanese Kokai Publication Sho-59-122541, Japanese Kokai Publication Sho-63-112642, Japanese Kokai Publication Hei-6-172631, Japanese Kokai Publication Hei-11-16763 and the like, however the production method is not limited to these exemplified methods. A preferred specific example is a production method involving blending a polyoxyalkylene polymer having a silicon-containing group capable of crosslinking by siloxane bond formation with a copolymer having a silicon-containing group capable of crosslinking by siloxane bond formation and a molecular chain substantially comprising a (meth)acrylic ester monomer unit having an alkyl group of 1 to 8 carbon atoms and represented by the following general formula (5):

-CH₂-C(R⁷) (COOR⁸) (5)

(wherein R⁷ represents a hydrogen atom or a methyl group; and R⁸ denotes an alkyl group having 1 to 8 carbon atoms) and a (meth)acrylic ester monomer unit having an alkyl group of 10 or more carbon atoms and represented by the following general formula (6):

-CH₂-C(R⁷) (COOR⁹)- (6)

(wherein R⁷ represents the same as defined above; and R⁹ denotes an alkyl group having 10 or more carbon atoms).

Examples of R⁸ in the above-mentioned formula (5) are alkyl groups having 1 to 8, preferably 1 to 4, and more preferably 1 or 2 carbon atoms such as methyl group, ethyl group, propyl group, n-butyl group, tert-butyl group, 2-ethylhexyl group and the like. The alkyl group standing for R⁸ may be a single alkyl group or two or more alkyl groups in combination.

Examples of R⁹ in the above-mentioned formula (6) are long chain alkyl groups having 10 or more, generally 10 to 30, and preferably 10 to 20 carbon atoms such as lauryl group, tridecyl group, cetyl group, stearyl group, behenyl group and the like. Same as the case of R⁸, the alkyl group standing for R⁹ may be a single alkyl group or two or more alkyl groups in combination.

Preferably, the molecular chain of the (meth)acrylic ester copolymer substantially comprises the monomer units represented by the general formulae (5) and (6) and "substantially" here means the total of the monomer units represented by the general formulae (5) and (6) contained in the copolymer exceeds 50% by weight. The total of the monomer units represented by the general formulae (5) and (6) is preferably 70% by weight or more.

The ratio of the monomer unit represented by the general formula (5) and the monomer unit represented by the general formula (6) is preferably from (95:5) to (40:60) and more preferably (90:10) to (60:40) on the basis of weight.

The monomer units which may be contained in the copolymer, other than those represented by the general formulae (5) and (6), may include acrylic acid such as acrylic acid and methacrylic acid; amido group-containing monomers such as acrylamide, methacrylamide, N-methylolacrylamide, and N-methylolmethacrylamide, epoxy group-containing monomers such as glycidyl acrylate and glycidyl methacrylate, and amino group-containing monomers such as diethylaminoethyl acrylate, diethylaminoethyl methacrylate, and aminoethyl vinyl ether; and monomer units derived from acrylonitrile, styrene, α-methylstyrene, alkyl vinyl ether, vinyl chloride, vinyl acetate, vinyl propionate, and ethylene.

The organic polymer obtained by blending the saturated hydrocarbon polymer having a silicon-containing group capable of crosslinking by siloxane bond formation and the (meth)acrylic ester copolymer having a silicon-containing group capable of crosslinking by siloxane bond formation may include those proposed in Japanese Kokai Publication Hei-1-168764, Japanese Kokai Publication 2000-186176 and the like, however it is not limited to these exemplified polymers.

Further, a production method of the organic polymer obtained by blending the (meth)acrylic ester polymer having a reactive silyl functional group may also include a method of polymerizing a (meth)acrylic ester monomer in the presence of an organic polymer having a silicon-containing group capable of crosslinking by siloxane bond formation. The methods are practically disclosed in Japanese Kokai Publication Sho-59-78223, Japanese Kokai Publication Sho-59-168014, Japanese Kokai Publication Sho-60-228516, Japanese Kokai Publication Sho-60-228517 and the like, however the method is not particularly limited to these exemplified methods.

On the other hand, the main chain skeleton of the organic polymer may contain another component such as an urethane bond component in an extent that the effect of the invention is not so significantly adversely affected.

The above-mentioned urethane bond component is not particularly limited and may include a group (hereinafter, referred to as an amido segment in some cases) produced by reaction of an isocyanate group and an active hydrogen group.

The amido segment is a group represented by the general formula (7):

-NR¹⁰-C(=O)- (7)

(wherein R¹⁰ denotes a hydrogen atom or a monovalent organic group, preferably a substituted or unsubstituted monovalent organic group having 1 to 20 carbon atoms, and more preferably a substituted or unsubstituted monovalent organic group having 1 to 8 carbon atoms).

The above-mentioned amido segment may specifically include an urethane group produced by reaction of an isocyanate group and a hydroxyl group; an urea group produced by reaction of an isocyanate group and an amino group; a thiourethane group produced by reaction of an isocyanate group and a mercapto group; and the like. Also, in the present invention, groups produced by reaction of an active hydrogen in the above-mentioned urethane group, urea group, and thiourea group further with an isocyanate group are also included as the group represented by the general formula (7).

An industrial method for easily producing the organic polymer having the amido segment and a silicon-containing group capable of crosslinking by siloxane bond formation may include, for rexample, a method for producing the organic polymer by causing reaction of an excess amount of a polyisocyanate compound with an organic polymer having an active hydrogen-containing group at a terminus for obtaining a polymer having an isocyanate group at the terminus of a polyurethane type main chain and either successively or simultaneously causing reaction of the W-group of a silicon compound represented by the general formula (8) with all or a portion of the isocyanate group:

W-R¹¹- SiR³_{3-c}X_{c} (8)

(wherein R³, X, and c are the same as described above; R¹¹ denotes a divalent organic group and more preferably a substituted or unsubstituted divalent hydrocarbon group having 1 to 20 carbon atoms; W denotes an active hydrogen-containing group selected from a hydroxyl, carboxyl, mercapto, and (primary or secondary) amino groups). Conventionally known production methods of the organic polymer relevant to the above-mentioned production method are exemplified in Japanese Kokoku Publication Sho-46-12154 (U.S. Patent No. 3,632,557), Japanese Kokai Publication Sho-58-109529 (U.S. Patent No. 4,374,237), Japanese Kokai Publication Sho-62-13430 (U.S. Patent No. 4,645,816), Japanese Kokai Publication Hei-8-53528 (EPO Patent No. 0676403), Japanese Kokai Publication Hei-10-204144 (EPO Patent No. 0831108), Japanese Kohyo Publication 2003-508561 (U.S. Patent No. 6,197,912), Japanese Kokai Publication Hei-6-211879 (U.S. Patent No. 5,364,955), Japanese Kokai Publication Hei-10-53637 (U.S. Patent No. 5,756,751), Japanese Kokai Publication Hei-11-100427, Japanese Kokai Publication 2000-169544, Japanese Kokai Publication 2000-169545, Japanese Kokai Publication 2002-212415, Japanese Patent No. 3,313,360, U.S. Patent No. 4,067,844, .S. Patent No. 3,711,445, Japanese Kokai Publication 2001-323040, and the like.

Also, the method may include a method for producing the organic polymer by causing reaction of an isocyanate compound having a reactive silicon-containing group represented by the general formula (9) with an organic polymer having an active hydrogen-containing group at a terminus:

O=C=N-R¹¹-SiR³_{3-c}X_{c} (9)

(wherein R³, R¹¹, X, and c are the same as described above). Conventionally known production methods of the organic polymer relevant to the above-mentioned production method are exemplified in Japanese Kokai Publication Hei-11-279249 (U.S. Patent No. 5,990,257), Japanese Kokai Publication 2000-119365 (U.S. Patent No. 6046270), Japanese Kokai Publication Sho-58-29818 (U.S. Patent No. 4345053), Japanese Kokai Publication Hei-3-47825 (U.S. Patent No. 5068304), Japanese Kokai Publication Hei-11-60724, Japanese Kokai Publication 2002-155145, Japanese Kokai Publication 2002-249538, WO 03/018658, WO 03/059981, and the like.

The organic polymer having an active hydrogen-containing group at a terminus may include oxyalkylene polymers having a hydroxyl group at a terminus (e.g. polyether polyols), polyacrylic polyols, polyester polyols, saturated hydrocarbon polymers having a hydroxyl group at a terminus (e.g. polyolefin polyols), polythiols compounds, polyamine compounds and the like. Among them, polyether polyols, polyacrylic polyols, and polyolefin polyols are preferable since the glass transition temperature of the organic polymers to be obtained is relatively low and cured products to be obtained are excellent in cold resistance. Particularly, polyether polyols are more preferable since the organic polymers to be obtained have low viscosity, good workability and excellent deep part curability and adhesion. Polyacrylic polyols and saturated hydrocarbon polymers are further preferable since cured products derived from the organic polymers to be obtained are excellent in weather resistance and heat resistance.

The polyether polyols to be used may be those which are produced by any production method, however the polyether polyols preferably have at least 0.7 hydroxyl groups per molecular terminus on average of all molecules. Practically, oxyalkylene polymers produced by using a conventional alkali metal catalyst; and oxyalkylene polymers produced by causing reaction of alkylene oxides with an initiator such as polyhydroxy compounds having at least two hydroxyl groups in the presence of a composite metal-cyanide complex or cesium can be exemplified, for example.

Among the above-mentioned polymerization methods, the polymerization method using a composite metal-cyanide complex is preferable since oxyalkylene polymers with low un-saturation degree, narrow Mw/Mn, low viscosity, high acid resistance, and high weather resistance can be obtained.

Examples of the above-mentioned polyacrylic polyols are polyols having a (meth) acrylic acid alkyl ester (co) polymer as a skeleton and containing a hydroxyl group in a molecule. A synthesis method of the polymers is preferably a living radical polymerization method and more preferably an atom transfer radical polymerization method since they give narrow molecular weight distribution and low viscosity. Also, a polymer obtained by so-called SGO process, that is a polymer obtained by continuous bulk polymerization of an acrylic alkyl ester monomer at high temperature and high pressure as described in Japanese Kokai Publication 2001-207157 is preferablly used. More practically, UH-2000 manufactured by Toagosei Co., Ltd. can be exemplified, for example.

Specific examples of the above-mentioned polyisocyanate compound may include aromatic polyisocyanates such as toluene (tolylene) diisocyanate, diphenylmethane diisocyanate, and xylylene diisocyanate; aliphatic polyisocyanates such as isophorone diisocyanate and hexamethylene diisocyanate; and the like.

The silicon compound represented by the general formula (8) is not particularly limited and specific examples thereof are amino group-containing silanes such as γ-aminopropyltrimethoxysilane, N-(β-aminoethyl)-y-aminopropyltrimethoxysilane, γ-(N-phenyl)aminopropyltrimethoxysilane, N-ethylaminoisobutyltrimethoxysilane, N-cyclohexylaminomethyltriethoxysilane, N-cyclohexylaminomethyldiethoxymethylsilane, and N-phenylaminomethyltrimethoxysilane; hydroxy group-containing silanes such as γ-hydroxypropyltrimethoxysilane; mercapto group-containing silanes such as γ-mercaptopropyltrimethoxysilane; and the like. Also, as described in Japanese Kokai Publication Hei-6-211879 (U.S. Patent No. 5,364,956), Japanese Kokai Publication Hei-10-53637 (U.S. Patent NO. 5,756,751), Japanese Kokai Publication Hei-10-204144 (EPO Patent No. 0831108), Japanese Kokai Publication 2000-169544, and Japanese Kokai Publication 2000-169545, Michael adducts of various kinds of α,β-unsaturated carbonyl compounds and primary amino group-containing silanes or Michael adducts of various kinds of (meth)acryloyl group-containing silanes and primary amino group-containing compounds are usable as the silicon compound represented by the general formula (8).

The isocyanate compound having a silicon-containing group capable of crosslinking by siloxane bond formation represented by the general formula (9) is not particularly limited and specific examples thereof are γ-trimethoxysilylpropyl isocyanate, γ-triethoxysilylpropyl isocyanate, γ-methyldimethoxysilylpropyl isocyanate, γ-methyldiethoxysilylpropyl isocyanate, trimethoxysilylmethyl isocyanate, triethoxymethylsilylmethyl isocyanate, dimethoxymethylsilylmethyl isocyanate, diethoxymethylsilylmethyl isocyanate and the like. Also, as described in Japanese Kokai Publication 2000-119365 (U.S. Patent No. 6,046,270), compounds obtained by reaction of silicon compounds represented by the general formula (8) and excess amounts of the above-mentioned polyisocyanate compounds are usable as the isocyanate compound having a silicon-containing group capable of crosslinking by siloxane bond formation represented by the general formula (9).

If a large quantity of the amido segment in contained in the main chain skeleton of the organic polymer as the component (A) of the invention, the viscosity of the organic polymer is increased and the composition may possibly be inferior in workability. On the other hand, due to the amido segment in the main chain skeleton of the component (A), the curability of the composition of the invention tends to be increased. Accordingly, in the case where the amido segment is contained in the main chain skeleton of the component (A), the number of amido segments is preferably 1 to 10, more preferably 1.5 to 7, and further preferably 2 to 5, per one molecule on average. If it is lower than 1, the curability is sometimes insufficient and if it is more than 10, the organic polymer become highly viscous and the composition may become inferior in workability.

In the invention, as the component (B), the carboxylic acid metal salt (b1) and/or the carboxylic acid (b2) is used. The component (B) is proper for forming a siloxane bond from a hydroxyl group or a hydrolysable group bond to a silicon atom contained in the organic polymer as the component (A), that is, the component (B) works as so-called silanol condensation catalyst.

The curable composition according to the invention may contain, as the component (B), either of a carboxylic acid metal salt (b1) and a carboxylic acid (b2) alone or both of a carboxylic acid metal salt (b1) and a carboxylic acid (b2). Each of them is preferred as a non-organotin catalyst in view of a light burden on the environment as imposed thereby. In particular, the carboxylic acid (b2) is more preferred since it is a catalyst substantially free of any metal. The carboxylic acid metal salt (b1) is also more preferred because of having better adhesion than the carboxylic acid (b2).

As the carboxylic acid metal salt and/or the carboxylic acid to be used in accordance with the invention, there is no particular limitation and various compounds can be used.

Preferable examples of the carboxylic acid metal salt (b1) are tin carboxylate, lead carboxylate, bismuth carboxylate, potassium carboxylate, calcium carboxylate, barium carboxylate, titanium carboxylate, zirconium carboxylate, hafnium carboxylate, vanadium carboxylate, manganese carboxylate, iron carboxylate, cobalt carboxylate, nickel carboxylate, and cerium carboxylate since they have high catalytic activity, more preferable examples are tin carboxylate, lead carboxylate, bismuth carboxylate, titanium carboxylate, iron carboxylate, and zirconium carboxylate, even more preferable examples may be tin carboxylate, and stannous carboxylate is most preferable.

As the carboxylate ion in the carboxylic acid metal salt, an ion derived from a hydrocarbon type compound which contains a carboxylic group and has 2 to 40 carbon atoms including the carbon of the carbonyl group is suitably used, and in terms of the availability, an ion derived from a hydrocarbon type carboxylic acid having 2 to 20 carbon atoms is further suitably used.

As the carboxylate ion in the carboxylic acid metal salt, there may be mentioned ionized forms of the following acids. Specific examples of these acids may include linear saturated fatty acids such as acetic acid, propionic acid, butyric acid, valeric acid, caproic acid, enanthic acid, caprylic acid, 2-ethylhexanoic acid, pelargonic acid, capric acid, undecanoic acid, lauric acid, tridecyl acid, myristic acid, pentadecyl acid, palmitic acid, heptadecyl acid, stearic acid, nonadecanoic acid, arachic acid, behenic acid, lignoceric acid, cerotic acid, montanic acid, melissic acid, and lacceric acid; mono-ene unsaturated fatty acids such as undecylenic acid, linderic acid, tsuzuic acid, physeteric acid, myristoleic acid, 2-hexadecenic acid, 6-hexadecenic acid, 7-hexadecenic acid, palmitoleic acid, petroselinic acid, oleic acid, elaidic acid, asclepic acid, vaccenic acid, gadoleic acid, gondoic acid, cetoleic acid, erucic acid, brassylic acid, selacholeic acid, ximenic acid, rumenic acid, acrylic acid, methacrylic acid, angelic acid, crotonic acid, isocrotonic acid, and 10-undecenic acid; polyene unsaturated fatty acids such as linoelaidic acid, linoleic acid, 10,12-octadecadienic acid, hiragonic acid, α-eleostearic acid, β-eleostearic acid, punicic acid, linolenic acid, 8,11,14-eicosatrienoic acid, 7,10,13-docosatrienoic acid, 4,8,11,14-hexadecatetraenoic acid, moroctic acid, stearidonic acid, arachidonic acid, 8,12,16,19-docosatetraenoic acid, 4,8,12,15,18-eicosapentaenoic acid, clupanodonic acid, herring acid, and docosahexaenoic acid; branched fatty acids such as 1-methylbutyric acid, isobutyric acid, 2-ethylbutyric acid, isovaleric acid, tuberculostearic acid, pivalic acid, and neodecanoic acid; triple bond-containing fatty acids such as propiolic acid, tariric acid, stearolic acid, crepenynic acid, ximenynic acid, and 7-hexadecinic acid; alicyclic carboxylic acids such as naphthenic acid, malvalinic acid, sterculic acid, hydnocarpic acid, chaulmoogric acid, and gorlic acid; oxygen-containing fatty acids such as acetoacetic acid, ethoxyacetic acid, glyoxylic acid, glycolic acid, gluconic acid, sabinic acid, 2-hydroxytetradecanoic acid, ipurolic acid, 2-hydroxyhexadecanoic acid, jarapinolic acid, juniperinic acid, ambrettolic acid, aleuritic acid, 2-hydroxyoctadecanoic acid, 12-hydroxyoctadecanoic acid, 18-hydroxyoctadecanoic cid, 9,10-dihydroxyoctadecanoic acid, ricinoleic acid, kamlolenic acid, licanic acid, phellonic acid, and cerebronic acid; halogen-substituted monocarboxylic acids such as chloroacetic acid, 2-chloroacrylic acid, and chlorobenzoic acid; and the like. Examples of the aliphatic dicarboxylic acids include saturated dicarboxylic acids such as adipic acid, azelaic acid, pimelic acid, suberic acid, sebacic acid, ethylmalonic acid, glutaric acid, oxalic acid, malonic acid, succinic acid, and oxydiacetic acid; unsaturated dicarboxylic acids such as maleic acid, fumaric acid, acetylenedicarboxylic acid, and itaconic acid; and the like. Examples of the aliphatic polycarboxylic acid are tricarboxylic acids such as aconitic acid, citric acid, and isocitric acid; and the like. Examples of the aromatic carboxylic acids are aromatic monocarboxylic acids such as benzoic acid, 9-anthracenecarboxylic acid, atrolactinic acid, anisic acid, isopropylbenzoic acid, salicylic acid, and toluic acid; aromatic polycarboxylic acids such as phthalic acid, isophthalic acid, terephthalic acid, carboxyphenylacetic acid, and pyromellitic acid; and the like. In addition, usable examples thereof are amino acids such as alanine, leucine, threonine, aspartic acid, glutamic acid, arginine, cysteine, methionine, phenylalanine, tryptophane and histidine.

Particularly, in terms of the availability, low cost, and compatibility with the component (A), the carboxylate ion is preferably ionized forms of 2-ethylhexanoic acid, octylic acid, neodecanoic acid, oleic acid, naphthenic acid or the like.

In the case where the melting point of the carboxylic acid is high (that is, the crystallinity thereof is high), the melting point of the carboxylic acid metal salt obtained therefrom is also high and therefore is difficult to be handled (that is, inferior in workability). Thus, the melting point of the carboxylic acid is preferablly 65°C or lower, more preferablly -50 to 50°C, and even more preferablly -40 to 35°C.

In the case where the number of carbon atoms of the carboxylic acid is high (that is, the molecular weight thereof is high), the carboxylic acid metal salt obtained therefrom is solid or thick liquid and thus is difficult to be handled (that is, inferior in workability). On the contrary, in the case where the number of carbon atoms of the carboxylic acid is low (that is, the molecular weight thereof is low), the carboxylic acid metal salt composed of the carboxylate ion obtained from the carboxylic acid contains a large quantity of components easy to be volatilized by heating and therefore the catalytic function of the carboxylic acid metal salt tends to be lowered in some cases. Particularly, in the case where the composition is thinly spread (as a thin layer), volatility thereof by heating is high and therefore the catalytic function of the carboxylic acid metal salt is considerably decreased in some cases. Accordingly, the above-mentioned carboxylic acid preferably has 2 to 20 carbon atoms, more preferably 6 to 17 carbon atoms, and even more preferably 8 to 12 carbon atoms including the carbon atom of the carbonyl group.

In terms of the handling easiness (workability and viscosity) of the carboxylic acid metal salt, dicarboxylic or monocarboxylic acid metal salts are preferable and monocarboxylic acid metal salts are even more preferable.

The above-mentioned carboxylic acid metal salt is preferably a metal salt of a carboxylic acid of which the carbon atom adjacent to a carbonyl group is a tertiary carbon (tin 2-ethylhexanoate, and the like) or a quaternary carbon (tin neodecanoate, tin pivalate, and the like) in terms of high curing rate and particularly preferably the metal salt of a carboxylic acid of which the carbon atom adjacent to a carbonyl group is a quaternary carbon. The metal salt of a carboxylic acid of which the carbon atom adjacent to a carbonyl group is a quaternary carbon is more excellent in the adhesion as compared with other carboxylic acid metal salts. Herein, the term "tertiary carbon" means a carbon atom bound to three carbon atoms, and the term "quaternary carbon" means a carbon atom bound to four carbon atoms.

Examples of the carboxylate ion in the metal salt of a carboxylic acid of which the carbon atom adjacent to a carbonyl group is a quaternary carbon may be ionized forms of linear fatty acids represented by the general formula (10): 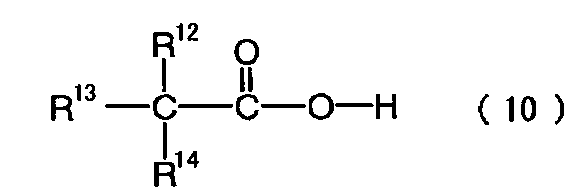 (wherein R¹², R¹³, and R¹⁴ independently denote a substituted or unsubstituted monovalent hydrocarbon group having 1 to 20 carbon atoms and may contain a carboxyl group) or alicyclic fatty acids represented by the general formulae (11): 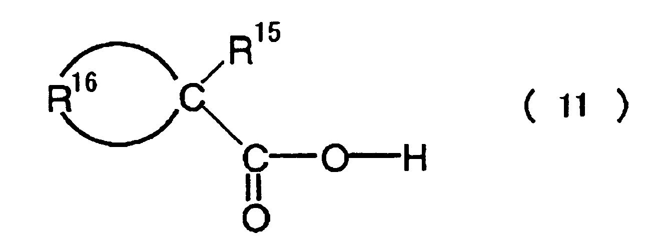 (wherein R¹⁵ denotes a substituted or unsubstituted monovalent hydrocarbon group, R¹⁶ denotes a substituted or unsubstituted divalent hydrocarbon group and both may contain a carboxyl group), and (12): 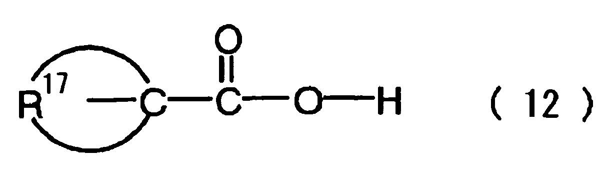 (wherein R¹⁷ denotes a substituted or unsubstituted trivalent hydrocarbon group and may contain a carboxyl group). Specific examples thereof include ionized forms of linear monocarboxylic acids such as pivalic acid, 2,2-dimethylbutyric acid, 2-ethyl-2-methylbutyric acid, 2,2-diethylbutyric acid, 2,2-dimethylvaleric acid, 2-ethyl-2-methylvaleric acid, 2,2-diethylvaleric acid, 2,2-dimethylhexanoic acid, 2,2-diethylhexanoic acid, 2,2-dimethyloctanoic acid, 2-ethyl-2,5-dimethylhexanoic acid, neodecanoic acid, versatic acid, and 2,2-dimethyl-3-hydroxypropoinic acid; linear dicarboxylic acids such as dimethylmalonic acid, ethylmethylmalonic acid, diethylmalonic acid, 2,2-dimethylsuccinic acid, 2,2-diethylsuccinic acid, and 2,2-dimethylglutaric acid; linear tricarboxylic acids such as 3-methylisocitric acid and 4,4-dimethylaconitic acid; cyclic carboxylic acids such as 1-methylcyclopentanecarboxylic acid, 1,2,2-trimethyl-1,3-cyclopentanedicarboxylic acid, 1-methylcyclohexanecarboxylic acid, 2-methylbicyclo[2.2.1]-5-heptene-2-carboxylic acid, 2-methyl-7-oxabicyclo[2.2.1]-5-heptene-2-carboxylic acid, 1-adamantanecarboxylic acid, bicycle[2.2.1]heptane-1-carboxylic acid, bicycle[2.2.2]octane-1-carboxylic acid; and the like. The compounds having a carboxylic acid of which the carbon atom adjacent to a carbonyl group is a tertiary carbon or a quaternary carbon exist many in nature and ionized forms of these may of course be used. Particularly in terms of good compatibility with the component (A) and handling easiness, monocarboxylic acid metal salts are more preferable and linear monocarboxylic acid metal salts are further preferable. Furthermore, due to the availability, metal salts of pivalic acid, neodecanoic acid, versatic acid, 2,2-dimethyloctanoic acid, 2-ethyl-2,5-dimethylhexanoic acid and the like are particularly preferable.

The carboxylate ion in the metal salt of a carboxylic acid of which the carbon atom adjacent to a carbonyl group is a quaternary carbon have preferably 5 to 20, more preferably 6 to 17, and further preferably 8 to 12 carbon atoms. If the number of carbon atoms is higher than the range, they tend to be solid and to become hardly compatible with the component (A) and thus no reactivity tends to be obtained. On the other hand, if the number of carbon atoms is lower than the range, they become more volatile and tend to be odorous. From this viewpoint, the metal salts of neodecanoic acid, versatic acid, 2,2-dimethyloctanoic acid, and 2-ethyl-2,5-dimethylhexanoic acid are most preferable.

Further, the above exemplified carboxylic acid metal salts as the component (b1) may be used alone and also two or more of them may be used in combination.

Examples of the carboxylic acid to be used as the component (b2) may be various carboxylic acids exemplified as the carboxylic acid from which the carboxylate ion in the carboxylic acid metal salt for the component (b1) is derived.

Similarly to the carboxylate ion in the carboxylic acid metal salt as the component (b1), as for the carboxylic acid of the component (b2), the number of carbon atoms including the carbon of the carbonyl group preferablly in a range from 2 to 20, more preferably 6 to 17, and even more preferably 8 to 12. In terms of the handling easiness (the workability and viscosity) of the carboxylic acid, dicarboxylic acids or monocarboxylic acids are preferable and monocarboxylic acids are more preferable. Further, the carboxylic acid is preferably a carboxylic acid of which the carbon atom adjacent to a carbonyl group is a tertiary carbon (2-ethylhexanoic acid, and the like) or a quaternary carbon (neodecanoic acid, pivalic acid, and the like) in terms of high curing rate and particularly preferably the carboxylic acid of which the carbon atom adjacent to a carbonyl group is a quaternary carbon. In terms of the adhesion, the carboxylic acid of which the carbon atom adjacent to a carbonyl group is a quaternary carbon is preferable.

In terms of the availability, curability, and workability, the carboxylic acid is particularly preferably 2-ethylhexanoic acid, neodecanoic acid, versatic acid, 2,2-dimethyloctanoic acid, 2-ethyl-2,5-dimethylhexanoic acid.

The component (b2) may be used alone or two or more of them may be used in combination.

The component (b1) and the component (b2) may be used alone or in combination.

When a carboxylic acid metal salt (b1) and a carboxylic acid (b2) are used in combination, it is particularly preferred that the carboxylic acid from which the carboxylate ion in the carboxylic acid metal salt (b1) is derived be the same as the carboxylic acid (b2).

The use of a carboxylic acid metal salt and/or a carboxylic acid as the component (B) gives cured products showing good recovery, durability and creep resistance.

The amount of the component (B) to be used is preferably about 0.01 to 20 parts by weight, more preferably about 0.5 to 10 parts by weight, per 100 parts by weight of the component (A). When the level of incorporation of the component (B) is below this range, the curing rate may become slow and, further, the catalytic activity may decrease after storage. When, on the other hand, the level of incorporation of the component (B) is in excess of the above range, the pot life may become excessively short, possibly leading to poor workability. When, in the case of combined use of a carboxylic acid metal salt (b1) and a carboxylic acid (b2), the amount of the carboxylic acid (b2) is excessive, the adhesive properties may become unsatisfactory in some instances.

In the case where the activity is low and a proper curability cannot be obtained by using the component (B) alone, an amine compound, which is the component (D), may be added as a promoter.

Specific examples of the amine compound as the component (D) may include aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; aliphatic secondary amines such as dimethylamine, diethylamine, dipropylamine, diisopropylamine, dibutylamine, diamylamine, dihexylamine, diocylamine, bis(2-ethylhexyl)amine, didecylamine, dilaurylamine, dicetylamine, distearylamine, N-methyl-N-stearylamine, N-ethyl-N-stearylamine, and N-butyl-N-stearylamine; aliphatic tertiary amines such as triamylamine, trihexylamine and trioxylamine; aliphatic unsaturated amines such as triallylamine and oleylamine; aromatic amines such as laurylaniline, stearylaniline, and triphenylamine; other amines such as monoethanolamine, diethanolamine, triethanolamine, 3-hydroxypropylamine, diethylenetriamine, triethylenetetramine, benzylamine, 3-methoxypropylamine, 3-lauryloxypropylamine, 3-dimethylaminopropylamine,3-diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, 1,8-diazabicyclo(5,4,0)undecene-7(DBU), and 1,5-diazabicyclo(4,3,0)nonene-5(DBN); and the like, however the amine compound is not limited to these examples.

Since the function of the component (D) as a promoter considerably differs in accordance with the structure of the component (D) itself and the compatibility with the component (A) in the present invention, owing to the high function as a promoter, primary amines such as octylamine and laurylamine are preferable and also amine compounds having a hydrocarbon group containing at least one heteroatom are preferable. Herein, the heteroatom includes N, O, S and the like, however it is not limited to these elements. Examples of the above-mentioned amine compounds are the amines exemplified as other amines, and the like. Among them, amine compounds having a hydrocarbon group containing a heteroatom on any carbon atom located at the second to fourth positions are more preferable. Examples of the amine compounds are ethylenediamine, ethanolamine, dimethylaminoethylamine, diethylaminoethylamine, 3-hydroxypropylamine, diethylenetriamine, 3-methoxypropylamine, 3-lauryloxypropylaimine, N-methyl-1,3-propanediamine, 3-dimethylaminopropylamine, 3-diethylaminopropylamine, 3-(1-piperadinyl)propylamine, 3-morpholinopropylamine and the like. Especially, 3-diethylaminopropylamine and 3-morpholinopropylamine are more preferable in terms of the high function as a promoter. Particularly preferable is 3-diethylaminopropylamine since it gives a curable composition with excellent adhesion, workability, and storage stability.

The addition amount of the amine compound as the component (D) is preferably about 0.01 to 20 parts by weight and more preferably 0.1 to 5 parts by weight per 100 parts by weight of the component (A). If the addition amount of the amine compound is lower than 0.01 parts by weight, the curing rate may possibly be retarded and curing reaction may not be promoted sufficiently in some cases. On the other hand, the addition amount of the amine compound exceeds 20 parts by weight, the pot life tends to be so short and then the workability tends to be worsened. On the contrary, the curing rate may be retarded in some cases.

The carboxylic acid metal salt and/or carboxylic acid is used as the curing catalyst of the invention and to an extent that the effect of the invention is not lowered, another curing catalyst may be used in combination. Specific examples of these may be titanium compounds such as tetrabutyl titanate, tetrapropyl titanate, titanium tetrakis(acetylacetonate), bis(acetylacetonato)diisopropoxytitanium, diisopropoxytitanium bis(ethylacetoacetate); organotin(IV) compounds such as dibutyltin dilaurate, dibutyltin maleate, dibutyltin phthalate, dibutyltin dioctanoate, dibutyltin bis(2-ethylhexanoate), dibutyltin bis(methylmaleate), dibutyltin bis(ethylmaleate), dibutyltin bis(butylmaleate), dibutyltin bis(octylmaleate), dibutyltin bis(tridecylmaleate) dibutyltin bis(benzylmaleate), dibutyltin diacetate, dioctyltin bis(ethylmaleate), dioctyltin bis(octylmaleate), dibutyltin dimethoxide, dibutyltin bis(nonylphenoxide), dibutenyltin oxide, dibutyltin oxide, dibutyltin bis(acetylacetonate), dibutyltin bis (ethylacetoacetate), a reaction product of dibutyltin oxide and a silicate compound, and a reaction product of dibutyltin oxide and a phthalic acid ester; organoaluminum compounds such as aluminum tris(acetylacetonate), aluminum tris(ethylacetoacetate), and diisopropoxyaluminum ethyl acetoacetate; zirconium compounds such as zirconium tetrakis(acetylacetonate). In the case of addition of an organotin compound, however, the toxicity thereof or the burden on the environment as exerted thereby may increase in response to the level of addition thereof and, therefore, the level of addition of an organotin compound is preferably not higher than 0.5 part by weight, more preferably not higher than 0.1 part by weight, still more preferably not higher than 0.01 part by weight, per 100 parts by weight of the component (A); substantial absence thereof is most preferred.

In accordance with the present invention, use is made, as the component (C), of a halogen atom-containing silicon compound represented by the general formula (1):

R¹_{4-a-b}YₐSi (OR²)_{b} (1)

(wherein 4-a-b R¹s each independently is a substituted or unsubstituted hydrocarbon group containing 1 to 20 carbon atoms or a triorganosiloxy group represented by (R")₃SiO- (in which three R"s each independently is a substituted or unsubstituted hydrocarbon group containing 1 to 20 carbon atoms); a Ys each independently is a halogen atom or a an alkyl group containing 1 to 20 carbons atoms and having a halogen atom on the carbon atom in the position α or β to the silicon atom; b R²s each independently is a hydrogen atom or a substituted or unsubstituted hydrocarbon group containing 1 to 20 carbon atoms; a is 1, 2 or 3, b is 1, 2 or 3, and a+b is 2, 3 or 4) and/or a partial hydrolysis condensate derived from a halogen atom-containing silicon compound represented by the general formula (1).

The use of the component (B) alone as a silanol condensation catalyst in practicing the invention tends to result in inferior curing rate and inferior adhesion as compared with the conventional use of organotin compounds. The use of the component (C) in combination with the component (B) in practicing the invention produces a specific curing rate- and adhesion-improving effect. Conversely, when an organotin compound is used in combination with the component (C), the curing rate rather tends to become reduced as compared with the case where no component (C) is added.

From the viewpoint of compatibility with component (A) and/or availability, R¹ in the general formula (1) is preferably a substituted or unsubstituted alkyl or aryl group, more preferably an unsubstituted alkyl or aryl group, still more preferably an unsubstituted alkyl group, particularly preferably an unsubstituted linear alkyl group. From the curing rate and/or availability viewpoint, the number of carbon atoms in R¹ is preferably 1 to 10, more preferably 1 to 4. Specific examples of R¹ are alkyl groups such as a methyl group, an ethyl group, a propyl group, a butyl group, a hexyl group, an octyl group, a decyl group, a dodecyl group, a tetradecyl group, a hexadecyl group and an octadecyl group; a cycloalkyl groups such as a cyclohexyl group; aryl groups such as a phenyl group, a tolyl group, a xylyl group, a biphenyl group, a naphthyl group, an anthryl group and a phenanthryl group; and aralkyl groups such as a benzyl group, among others.

From the viewpoint of curing rate and/or availability, R² in the general formula (1) is preferably a substituted or unsubstituted alkyl or aryl group, more preferably a substituted or unsubstituted alkyl group, still more preferably an unsubstituted alkyl group, particularly preferably an unsubstituted linear alkyl group. From the curing rate and/or availability viewpoint, the number of carbon atoms in R² is preferably 1 to 10, more preferably 1 to 4, still more preferably 1 to 2, and particularly preferably 1. Specific examples of R² are alkyl groups such as a methyl group, an ethyl group, a propyl group, a butyl group, a hexyl group, an octyl group, a decyl group, a dodecyl group, a tetradecyl group, a hexadecyl group and an octadecyl group; a cycloalkyl groups such as a cyclohexyl group; aryl groups such as a phenyl group, a tolyl group, a xylyl group, a biphenyl group, a naphthyl group, an anthryl group and a phenanthryl group; and aralkyl groups such as a benzyl group, among others. Among them, a methyl group, an ethyl group, a propyl group, a butyl group and a phenyl group are preferred, a methyl group and an ethyl group are more preferred, and a methyl group is particularly preferred.

In cases where Y in the above general formula (1) is a halogen atom, the halogen atom is preferably a fluorine or chlorine atom from the curability and/or availability viewpoint and, from the stability viewpoint, it is more preferably a fluorine atom. In cases where Y is an alkyl group having a halogen atom on the carbon atom in the position α or β to the silicon atom, an alkyl group having a fluorine or chlorine atom on the carbon atom in the position α or β to the silicon atom is preferred, an alkyl group having a fluorine or chlorine atom on the carbon atom in the position α to the silicon atom is more preferred, and an alkyl group having a chlorine atom on the carbon atom in the position α to the silicon atom is particularly preferred, from the curability and/or availability viewpoint. When Y contains a carbon atom or atoms, the number of carbon atoms is preferably 1 to 10, more preferably 1 to 4, still more preferably 1 or 2, particularly preferably 1, from the curability and/or availability viewpoint. Typical examples of Y are halogen atoms such as a fluorine atom, a chlorine atom, a bromine atom and an iodine atom; and alkyl groups having at least one halogen atom on the carbon atom in the position α or β to the silicon atom, such as a chloromethyl group, a bromomethyl group, a dichloromethyl group, a trichloromethyl group, a 1-chloroethyl group, a 2-chloroethyl group, a fluoromethyl group, a 1-fluoroethyl group, a 2-fluoroethyl group, a trifluoromethyl group, a pentafluoroethyl group, a perfluoroalkyl group, a trifluoromethylmethyl group and a 2-perfluoroalkylmethyl group, among others. Among these, a fluorine atom or a chloromethyl group is preferred, and a chloromethyl group is particularly preferred.

From the stability and/or availability viewpoint, a in the above general formula (1) is preferably 1 or 2, more preferably 1.

From the curability viewpoint, b in the general formula (1) is preferably 2 or 3, more preferably 3.

As specific examples of the component (C), there may be mentioned chloromethyltrimethoxysilane, chloromethyldimethoxysilane, dichloromethyltrimethoxysilane, dichloromethyldimethoxymethylsilane, bis(chloromethyl)dimethoxysilane, 2-chloroethyltrimethoxysilane, fluoromethyltrimethoxysilane, trifluoromethylmethyltrimethoxysilane, perfluoroalkylmethyltrimethoxysilanes, chlorotrimethoxysilane, fluorotrimethoxysilane and fluorotriethoxysilane, among others. From the curability, stability and/or availability viewpoint, chloromethyltrimethoxysilane and fluorotriethoxysilane are preferred, and chloromethyltrimethoxysilane is particularly preferred.

Such halogen atom-containing silicon compounds (C) may be used singly or two or more of them may be used in combination.

The level of addition of the component (C) is preferably 0.1 to 20 parts by weight, more preferably 0.5 to 10 parts by weight, still more preferably 1 to 5 parts by weight, per 100 parts by weight of the component (A). At levels below 0.1 part by weight, the curability improving effect tends to be insignificant and, at levels exceeding 20 parts by weight, the mechanical strength of the cured products may be low in certain instances.

Further, a silicate may be used for the composition of the invention. The silicate works as a crosslinking agent and has a function of improving the recovery, durability, and creep resistance of the organic polymer of the component (A) of the invention. Further, it also has a function to improve the adhesion and water-resistant adhesion, and adhesion durability at a high temperature and high humidity condition. Tetraalkoxysilane or partially hydrolyzed condensates of the tetraalkoxysilane may be used as the silicate. In the case where a silicate is used, the use amount thereof is preferably 0.1 to 20 parts by weight and more preferably 0.5 to 10 parts by weight per 100 parts by weight of the component (A).

Specific examples of the silicates are tetraalkoxysilanes (tetraalkyl silicates) such as tetramethoxysilane, tetraethoxysilane, ethoxytrimethoxysilane, dimethoxydiethoxysilane, methoxytriethoxysilane, tetra(n-propoxy)silane, tetra(iso-propoxy)silane, tetra(n-butoxy)silane, tetra(iso-butoxy)silane, and tetra(tert-butoxysilane), and their partially hydrolyzed condensates.

The partially hydrolyzed condensates of the tetraalkoxysilanes are more preferable since the condensates are more effective to improve the recovery, durability and creep resistance of the invention than tetraalkoxysilanes.

The above-mentioned partially hydrolyzed condensates of the tetraalkoxysilanes are obtained by a common method of adding water to a tetralkoxysilane and thereby partially hydrolyzing and condensing the tetraalkoxysilane. Further, commercialized products may be used as the partially hydrolyzed condensates of the organosilicate compounds. Examples of the condensates are Methyl silicate 51 and Ethyl silicate 40 (both manufactured by Colcoat Co., Ltd.), and the like.

A filler may be used for the composition of the invention. Examples of the filler may include reinforcing fillers such as fumed silica, precipitated silica, crystalline silica, fused silica, dolomite, silicic anhydride, hydrous silicic acid, and carbon black; fillers such as ground calcium carbonate, colloidal calcium carbonate, magnesium carbonate, china clay, calcined clay, clay, talc, titanium oxide, bentonite, organic bentonite, ferric oxide, aluminum fine powder, flint powder, zinc oxide, activated zinc white, shirasu balloon, glass microballoon, organic microballoon of phenol resins and vinylidene chloride resins, and resin powder such as PVC powder and PMMA powder; fibrous fillers such as asbestos, glass fibers and filaments; and the like. In the case where a filler is used, the use amount thereof is preferably 1 to 250 parts by weight and more preferably 10 to 200 parts by weight per 100 parts by weight of the component (A).

As described in Japanese Kokai Publication 2001-181532, the filler may be previously dehydrated and dried by evenly mixing the filler with a dehydration agent such as calcium oxide, enclosing the mixture in a bag made of an air-tight material, and leaving the bag for a proper duration. Use of the filler with lowered water content improves the storage stability particularly in the case of a one-pack composition.

In the case where a composition with high transparency is obtained, as described in Japanese Kokai Publication Hei-11-302527, a polymer powder derived from a polymer such as methyl methacrylate, amorphous silica or the like may be used as a filler. Also, as described in Japanese Kokai Publication 2000-38560, a composition with high transparency can be obtained by using hydrophobic silica, that is a micronized silicon dioxide bonded with hydrophobic groups on the surface, as a filler. Generally, silanol groups (-SiOH) form the surface of the micronized silicon dioxide and a hydrophobic silica is produced by forming (-SiO-hydrophobic group) by causing reaction of the silanol group with an organic silicon halide compound, alcohols and/or the like. Particularly, the silanol group on the surface of the micronized silicon dioxide is reacted and bonded with dimethylsiloxane, hexamethyldisilazane, dimethyldichlorosilane, trimethoxyoctylsilane, trimethylsilane or the like. The micronized silicon dioxide the surface of which is composed of silanol groups (-SiOH) is called as a micronized hydrophilic silica.

In the case of obtaining a cured product with high strength by using these fillers, it is preferable to use mainly a filler selected from fumed silica, precipitated silica, crystalline silica, fused silica, dolomite, silicic anhydride, hydrous silicic acid and carbon black, surface-treated fine calcium carbonate, calcined clay, clay, activated zinc white and the like and if it is used in a range from 1 to 200 parts by weight per 100 parts by weight of the component (A), a preferred result can be obtained. In the case where a cured product with low strength and high elongation at break is obtained, a preferred result can be attained by mainly using 5 to 200 parts by weight of a filler selected from titanium oxide, calcium carbonate such as ground calcium carbonate, magnesium carbonate, talc, ferric oxide, zinc oxide, shirasu balloon and the like per 100 parts by weight of the component (A). In general, calcium carbonate has more significant effect of improving the strength at break, elongation at break, and adhesion of a cured product, as it has higher specific surface area. These fillers may be used alone or two or more of the may be used as a mixture. In the case where calcium carbonate is used, it is desirable to use surface-treated fine calcium carbonate, ground calcium carbonate and the like calcium carbonate with large particle diameter in combination. The surface-treated fine calcium carbonate is preferable to have a particle diameter of 0.5 µm or smaller and surface-treated with a fatty acid or a fatty acid salt. Calcium carbonate with a large particle diameter is preferable to have a particle diameter of 1 µm or larger, and surface-untreated one may be used.

To improve the workability (antisagging property) of the composition and deluster the cured product surface, it is preferable to add an organic balloon and/or an inorganic balloon. These fillers may be surface-treated and may be used alone or two ore more of them may be used in combination. To improve the workability (antisagging property), the particle diameter of the balloons is preferable to be 0.1 mm or smaller. To deluster the cured product surface, the above-mentioned particle diameter is preferable to be 5 to 300 µm.

Because the composition of the invention gives the cured product with excellent chemical resistance, for example, the composition can be suitably applied to the joints of exterior walls of houses, such as siding boards, particularly ceramic siding boards, adhesives for exterior wall tiles, adhesives for exterior wall tiles that remain in joints as they are, and the like, but it is preferable to match the sealant design to the exterior wall design. As exterior walls, in particular, those with a deluxe feeling created by spatter coating or incorporation of colored aggregates etc. become to be used. When a scaly or particulate substance not less smaller 0.1 mm, preferably about 0.1 to 5.0 mm, in diameter is formulated into the composition of the invention, the cured product matches up well with such deluxe-finished exterior walls and, in addition, shows good chemical resistance. Thus, the composition is enabled to give the cured product capable of retaining the appearance over years. When a particulate substance is formulated, a pebbled or sandstone-like coarse surface texture can be expressed. When a scaly substance is formulated, an irregular surface resulting from its scaly shape can be expressed.

As described in Japanese Kokai Publication Hei-9-53063, the diameter, addition amount, and materials desirable for the scaly or particulate substance are as follows.

The diameter is preferably 0.1 mm or larger and more preferably about 0.1 to 5.0 mm and may be selected properly in accordance with the material, the pattern, or the like of the exterior wall. Those substances with a diameter of about 0.2 to 5.0 mm or about 0.5 to 5.0 mm are also usable. In the case of a scaly substance, the thickness to the diameter is proper to be about 1/10 to 1/5 (that is, the diameter is proper to be about 0.01 to 1.00 mm). The scaly or particulate substance is previously mixed with a base material of sealant and transported to the working field as a sealant or mixed with the base material of sealant at the working field when used.

The scaly or particulate substance is added in a range from about 1 to 200 parts by weight per 100 parts by weight of the composition such as the sealant composition or the adhesive composition. The addition amount is properly selected in accordance with the size of the scaly or particulate substance, the material and patterns of the exterior wall, and/or the like.

Examples to be used as the scaly or particulate substance may be natural substances such as silica sand and mica; synthetic rubber, synthetic resins, and inorganic material such as alumina. To improve the design quality when the substance is used for filling the joint, the scaly or particulate substance is colored with a proper color matched with the material and patterns of the exterior wall, and the like.

A preferable finishing method is described in Japanese Kokai Publication Hei-9-53063.

Also, if a balloon (preferably those with an average particle diameter of 0.1 mm or larger) is used for the same purpose, the pebbled or sandstone-like coarse surface texture can be obtained and the weight can be reduced. As described in Japanese Kokai Publication Hei-10-251618, the diameter, the addition amount, and the type of a preferable balloon are as follows.

The balloon is a spherical filler having a hollow inside. The material of the balloon may be inorganic materials such as glass, shirasu, and silica; and organic materials such as phenol resins, urea resins, polystyrene, and Saran, however it is not limited to these examples and an inorganic material and an organic material may be compounded or layered to form a plurality of layers. Inorganic, or organic, or their composite balloons may be used, for example. Also, the balloon to be used may be a single type one or a plurality of kinds of balloons of different materials may be used as a mixture. Further, the surface of the balloon to be used may be processed or coated, or may be treated with various kinds of surface treating agents. For example, an organic balloon may be coated with calcium carbonate, talc, titanium oxide, or the like; or an inorganic balloon may be surface-treated with a silane coupling agent.

To obtain the pebbled or sandstone-like coarse surface texture, the diameter of the balloon is preferably 0.1 mm or larger. The balloons having a diameter of about 0.2 to 5.0 mm or about 0.5 to 5.0 mm are also usable. In the case where the diameter is smaller than 0.1 mm, even if a large quantity of the balloon is added, it only results in increase of the viscosity of the composition and no coarse surface texture can be obtained in some cases. The addition amount of the balloon may be easily determined in accordance with the coarseness of the desired pebbled or sandstone-like texture. Generally, it is desirable to add the balloon having a diameter of 0.1 mm or larger in an amount of 5 to 25% by volume in the composition. If the concentration by volume of the balloon is lower than 5% by volume, no coarse surface texture can be obtained. If the concentration exceeds 25% by volume, there is a tendency of increasing the viscosity of the sealant and the adhesive, worsening the workability, increasing the modulus of the cured product, and thus deteriorating the basic properties of the sealant and adhesive. The concentration by volume is particularly preferably 8 to 22% by volume in terms of the balance with the basic properties of the sealant.

In the case of using balloons, it is allowed to use a slip preventing agent as described in Japanese Kokai Publication 2000-154368 and an amine compound, particularly a primary and/or a secondary amine with a melting point of 35°C or higher as described in Japanese Kokai Publication 2001-164237 for making the surface of a cured product uneven and delustered.

Specific examples of the balloon are described in Japanese Kokai Publication Hei-2-129262, Japanese Kokai Publication Hei-4-8788, Japanese Kokai Publication Hei-4-173867, Japanese Kokai Publication Hei-5-1225, Japanese Kokai Publication Hei-7-113073, Japanese Kokai Publication Hei-9-53063, Japanese Kokai Publication Hei-10-251618, Japanese Kokai Publication 2000-154368, Japanese Kokai Publication 2001-164237, WO 97/05201 and the like.

Also, thermally-expansive hollow microspheres described in Japanese Kokai Publication 2004-51701, Japanese Kokai Publication 2004-66749 and the like can be used. The phrase "the thermally-expansive hollow microspheres" means plastic spheres obtained by spherically enclosing low boiling point compounds such as a hydrocarbon with 1 to 5 carbon atoms by a polymer coating material (vinylidene chloride copolymer, an acrylonitrile copolymer, or a vinylidene chloride-acrylonitrile copolymer). Heating of the adhesion part formed using the composition of the invention increases the gas pressure in the coat of the thermally-expansive hollow microspheres and softens the polymer coating material to drastically expand the volume and separate the adhesion interface. Addition of the thermally-expansive hollow microspheres gives a thermally peelable adhesive composition which can be easily peeled by heating at the time of disposal without breaking materials and using any organic solvents.

Even in the case where the composition of the invention contains sealant-cured particles, the cured product can be provided with an uneven surface and an improved design. The diameter, addition amount, and usable materials etc. for the sealant-cured particles are preferable to be as described in Japanese Kokai Publication 2001-115142. The diameter is preferably 0.1 to 1 mm and more preferably about 0.2 to 0.5 mm. The addition amount is preferably in a range from 5 to 100% by weight and more preferably in a range from 20 to 50% by weight in the curable composition. The usable materials may be urethane resins, silicones, modified silicones, polysulfide rubber and the like and they are not particularly limited if they are usable for a sealant. Modified silicone type sealants are preferable.

A plasticizer may be used in the composition of the present invention. Addition of the plasticizer may adjust the viscosity and slump property of the curable composition, and the mechanical properties such as tensile strength and elongation property of the cured product obtained from the curable composition. As example of the plasticizer, there may be mentioned phthalic acid esters such as dibutyl phthalate, diheptyl phthalate, bis(2-ethylhexyl) phthalate, and butyl benzyl phthalate; non-aromatic dibasic acid esters such as dioctyl adipate, dioctyl sebacate, dibutyl sebacate, and isodecyl succinate; aliphatic esters such as butyl oleate and methyl acetylricinoleate; phosphoric acid esters such as tricresyl phosphate and tributyl phosphate; trimellitic acid esters; chloroparaffins; hydrocarbon oils such as alkyldiphenyl and partially hydrogenated terphenyl; processed oils; epoxy plasticizers such as epoxylated soybean oil and benzyl epoxystearate.

Further, a polymer plasticizer may be used. If the polymer plasticizer is used, the initial physical properties can be maintained for a long duration as compared with the case of using a low molecular weight plasticizer, which is a plasticizer containing no polymer component in the molecule. Further, the drying property (also called as coatability) is also improved in the case where an alkyd coating material is applied to the cured product. Specific examples of the polymer plasticizer are vinyl polymers obtained by polymerizing vinyl monomers by various methods; polyalkylene glycol esters such as diethylene glycol dibenzoate, triethylene glycol dibenzoate, pentaerythritol ester; polyester-type plasticizers obtained from bibasic acids such as sebacic acid, adipic acid, azelaic acid, and phthalic acid and dihydric alcohols such as ethylene glycol, diethylene glycol, triethylene glycol, propylene glycol, and dipropylene glycol; polyether polyols such as polyethylene glycol, polypropylene glycol, and polytetramethylene glycol having a molecular weight of 500 or higher and more preferably 1,000 or higher, polyether polyol derivertives obtained by converting hydroxyl groups of these polyether polyols into ester groups, ether groups or the like, and the like polyethers; polystyrenes such as polystyrene and poly(α-methylstyrene); polybutadiene, polybutene, polyisobutylene, butadiene-acrylonitrile, polychloroprene and the like, however the polymer plasticizer is not limited to these examples.

Among the exemplified polymer plasticizers, those which are compatible with the polymer of the component (A) are preferable. From this viewpoint, polyethers and vinyl polymers are preferable. Further, from the viewpoint where the surface curability and deep part curability are improved and curing delay during storage does not occur, polyethers are preferablly used and polypropylene glycol is more preferablly used as a plasticizer. Additionally, in terms of the compatibility, weather resistance, and heat resistance, vinyl polymers are preferable. Among vinyl polymers, acrylic polymers and/or methacrylic polymers are preferable and acrylic polymers such as polyacrylic alkyl esters are more preferable. A synthesis method of the polymers is preferably a living radical polymerization method and more preferably an atom transfer radical polymerization method since these are suitable for narrowing the molecular weight distribution and lowering the viscosity. Also, a polymer obtained by so-called SGO process, that is a polymer obtained by continuous bulk polymerization of an acrylic alkyl ester monomer at high temperature and high pressure as described in Japanese Kokai Publication 2001-207157 is preferablly used.

The number average molecular weight of the polymer plasticizer is preferably 500 to 15,000, more preferably 800 to 10,000, furthermore preferably 1,000 to 8,000, even more preferably 1,000 to 5,000, and most preferably 1,000 to 3,000. If the molecular weight is too low, the plasticizer is eluted by heat or rain fall with the lapse of time so as to fail to maintain the initial physical properties for a long duration and therefore fail to improve the alkyd coatability. If the molecular weight of the polymer is too high, the viscosity is increased to worsen the workability. Although the molecular weight distribution of the polymer plasticizer is not particularly limited, it is preferably narrow and preferably lower than 1.80. It is further preferably 1.70 or lower, furthermore preferably 1.60 or lower, even more preferably 1.50 or lower, particularly preferably 1.40 or lower, and most preferably 1.30 or lower.

The number average molecular weight is measured by a GPC method in the case of a vinyl polymer and by a terminal group analysis method in the case of a polyether polymer. The molecular weight distribution (Mw/Mn) is measured by the GPC method (conversion into polystyrene).

The polymer plasticizer may or may not contain the reactive silicon group. In the case of containing the reactive silicon group, it works as a reactive plasticizer and prevents transfer of the plasticizer from the cured product. In the case where the reactive silicon group is contained, the number of the group is preferably 1 or lower and more preferably 0.8 or lower on average per one molecule. In the case where the plasticizer having a reactive silicon group, particularly an oxyalkylene polymer having a reactive silicon group, is used, the number average molecular weight thereof is necessarily to be lower than that of the polymer of the component (A).

The plasticizer may be used alone or two or more of these may be used in combination. Further, a low molecular weight plasticizer and the polymer plasticizer may be used in combination. These plasticizers may be added at the time of polymer production.

The use amount of the plasticizer is preferably 5 to 150 parts by weight, more preferably 10 to 120 parts by weight, and still more preferably 20 to 100 parts by weight, per 100 parts by weight of the component (A). If it is less than 5 parts by weight, the effect as a plasticizer is not exhibited sometimes and if it exceeds 150 parts by weight, the mechanical strength of the cured product may become insufficient.

The composition of the invention may contain a silane coupling agent, a reaction product of a silane coupling agent, or a compound other than the silane coupling agent as an adhesion promoter. Specific examples of the silane coupling agent are isocyanate group-containing silanes such as γ-isocyanatopropyltrimethoxysilane, γ-isocyanatopropyltriethoxysilane, γ-isocyanatopropylmethyldiethoxysilane, γ-isocyanatopropylmethyldimethoxysilane, isocyanatomethyltrimethoxysilane, isocyanatomethyltriethoxysilane, isocyanatomethyldimethoxysilane, and isocyanatomethyldiethoxymethylsilane; amino group-containing silanes such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-(2-(2-aminoethyl)aminoethyl)aminopropyltrimethoxysilane, γ-(6-aminohexyl)aminopropyltrimethoxysilane, 3-(N-ethylamino)-2-methylpropyltrimethoxysilane, 2-aminoethylaminomethyltrimethoxysilane, N-cyclohexylaminomethyltriethoxysilane, N-cyclohexylaminomethyldiethoxymethylsilane, γ-ureidopropyltrimethoxysilane, γ-ureidopropyltriethoxysilane, N-phenyl-γ-aminopropyltrimethoxysilane, N-phenylaminomethyltrimethoxysilane, N-benzyl-γ-aminopropyltrimethoxysilane, and N-vinylbenzyl-y-aminopropyltriethoxysilane; mercapto group-containing silanes such as γ-mercaptopropyltrimethoxysilane, γ-mercaptopropyltriethoxysilane, γ-mercaptopropylmethyldimethoxysilane, γ-mercaptopropylmethyldiethoxysilane, mercaptomethyltrimethoxysilane, and mercaptomethyltriethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; carboxysilanes such as β-carboxyethyltriethoxysilane, β-carboxyethylphenylbis(2-methoxyethoxy)silane, and N-β-(carboxymethyl)aminoethyl-γ-aminopropyltrimethoxysilane ; vinyl type unsaturated group-containing silanes such as vinyltrimethoxysilane, vinyltriethoxysilane, γ-methacryloyloxypropylmethyldimethoxysilane, γ-acryloyloxypropyltriethoxysilane, and methacryloyloxymethyltrimethoxysilane; halogen-containing silanes such as γ-chloropropyltrimethoxysilane; isocyanurate silanes such as tris(3-trimethoxysilylpropyl)isocyanurate; and the like. Examples usable as the silane coupling agent may also include modified derivatives of these exemplified compounds such as amino-modified silyl polymers, silylated aminopolymers, unsaturated aminosilane complexes, phenylamino-long chain alkylsilane, aminosilylated silicones, and silylated polyesters. Examples of the reaction product of the silane coupling agent are reaction products of the above-mentioned aminosilanes and epoxysilanes, reaction products of the aminosilanes and isocyanate silanes, partially condensed silane coupling agents, and the like.

In the case where the silane coupling agent is used in the invention, the agent is used generally in a range from 0.1 to 20 parts by weight per 100 parts by weight of the component (A). It is particularly preferable to be used in a range from 0.5 to 10 parts by weight.

The effect of the silane coupling agent to be added to the curable composition of the invention is to remarkably improve the adhesion in a non-primer condition or primer condition in the case of using the composition of the invention for various kinds of adherends, that is, inorganic substrates such as glass, aluminum, stainless steel, zinc, copper, and mortar and organic substrates such as polyvinyl chloride, acrylic polymer, polyester, polyethylene, polypropylene, and polycarbonate. In the case where the composition is used in the non-primer condition, the effect to improve the adhesion to various kinds of adherends is particularly significant.

Examples of the adhesion promoter other than the silane coupling agents are not particularly limited and for example, epoxy resins, phenol resins, sulfur, alkyl titanates, aromatic polyisocyanate and the like may be exemplified. The above-exemplified adhesion promoters may be used alone or two or more of them may be used as a mixture. Addition of these adhesion promoters can improve the adhesion to the adherend.

The composition of the invention may contain a tackfier. The tackfier is not particularly limited and commonly used ones may be used regardless of the phase thereof being solid or liquid at an ambient temperature. Specific examples thereof may be styrene block copolymers, hydrogenated products thereof, phenol resins, modified phenol resins (e. g. cashew oil-modified phenol resins, tall oil-modified phenol resins, and the like), terpene phenol resins, xylene-phenol resins, cyclopentadiene-phenol resins, cumarone indene resins, rosin resins, rosin ester resins, hydrogenated rosin ester resins, xylene resins, low molecular weight polystyrene resins, styrene copolymer resins, petroleum resins (e.g., C5 hydrocarbon resins, C9 hydrocarbon resins, C5 hydrocarbon-C9 hydrocarbon copolymer resins, and the like), hydrogenated petroleum resins, terpene resins, DCPD resins petroleum resins, and the like. They may be used alone and two or more of them may be used in combination. Examples of the styrene block copolymers and the hydrogenated products thereof are styrene-butadiene-styrene block copolymer (SBS), styrene-isoprene-styrene block copolymer (SIS), styrene-ethylene-butylene-styrene block copolymer (SEBS), styrene-ethylene-propylene-styrene block copolymer (SEPS), styrene-isobutylene-styrene block copolymer (SIBS), and the like. The above-mentioned tackfier s may be used alone or two or more of them may be used in combination.

The tackfier may be preferably used in a range from 5 to 1,000 parts by weight and more preferably 10 to 100 parts by weight per 100 parts by weight of the component (A).

The composition of the invention may contain a solvent or a diluent. The solvent or diluent is not particularly limited and aliphatic hydrocarbons, aromatic hydrocarbons, alicyclic hydrocarbons, halogenated hydrocarbons, alcohols, esters, ketones, ethers and the like may be used. In the case where a solvent or diluent is used, in terms of a problem of air pollution at the time of using the composition indoors, the boiling point of the solvent is preferably 150°C or higher, more preferably 200°C or higher, and further preferably 250°C or higher. The above-mentioned solvents or diluents may be used alone or two or more of them may be used in combination.

Based on the necessity, the curable composition of the invention may contain a physical property modifier for adjusting tensile properties of the cured product to be obtained. The physical property modifier is not particularly limited and examples thereof are alkylalkoxysilanes such as methyltrimethoxysilane, dimethyldimethoxysilane, trimethylmethoxysilane, and n-propyltrimethoxysilane; alkylisopropenoxysilanes such as dimethyldiisopropenoxysilane, methyltriisopropenoxysilane, γ-glycidoxypropylmethyldiisopropenoxysilane; functional group-containing alkoxysilanes such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane, γ-mercaptopropylmethyldimethoxysilane; silicone vanishes; polysiloxanes; and the like. Use of the above-mentioned physical property modifiers increases the hardness of the cured product obtained by curing the composition of the invention, or, on the contrary, decreases the hardness in order to increase the elongation at break. The above-mentioned physical property modifiers may be used alone or two or more of them may be used in combination.

Particularly, a compound from which a compound containing a monovalent silanol group in a molecule is produced by hydrolysis has a function of decreasing the modulus of the cured product without worsening the stickiness of the surface of the cured product. Particularly, a compound from which trimethylsilanol is produced is preferable. Examples of the compound from which a compound containing a monovalent silanol group in a molecule is produced by hydrolysis are compounds described in Japanese Kokai Publication Hei-5-117521. Further, examples of the compound may include derivatives of alkylalcohols, such as hexanol, octanol and decanol, from which silicon compounds forming R₃SiOH such as trimethylsilanol are produced by hydrolysis; derivatives of polyhydric alcohols having 3 or more hydroxyl groups, such as trimethylolpropane, glycerin, pentaerythritol and sorbitol, as described in Japanese Kokai Publication Hei-11-241029, from which silicon-containing compounds forming R₃SiOH such as trimethylsilanol are produced by hydrolysis.

Examples may further include oxypropylene polymer derivatives as described in Japanese Kokai Publication Hei-7-258534 from which silicon compounds forming R₃SiOH such as trimethylsilanol are produced by hydrolysis. Usable examples may also include polymers having a silicon-containing group to be converted into monosilanol-containing compounds by hydrolysis with a crosslinkable and hydrolysable silicon-containing group, as described in Japanese Kokai Publication Hei-6-279693.

The physical property modifier is preferably used in a range from 0.1 to 20 parts by weight and more preferably from 0.5 to 10 parts by weight per 100 parts by weight of the component (A).

The curable composition of the invention may contain a thixotropic agent (antisagging agent) for preventing sagging in order to improve the workability, according to need. The antisagging agent is not particularly limited and polyamide waxes; hydrogenated castor oil derivatives; metal soaps such as calcium stearate, aluminum stearate, and barium stearate; and the like. Further, if rubber powders with a particle diameter of 10 to 500 µm as described in Japanese Kokai Publication Hei-11-349916 and/or organic fibers as described in Japanese Kokai Publication 2003-155389 are used, the composition with high thixotropy and good workability can be obtained. These thixotropic agents (antisagging agents) may be used alone or two or more of them may be used in combination. The thixotropic agent may be used in a range from 0.1 to 20 parts by weight per 100 parts by weight of the component (A).

The composition of the invention may contain a compound having an epoxy group in one molecule. Addition of the compound having an epoxy group increases the restorability of the cured product. Examples of the compound having an epoxy group may include epoxylated unsaturated fats and oils, epoxylated unsaturated fatty acid esters, alicyclic epoxy compounds and epichlorohydrin derivatives, mixtures of these compounds, and the like. More particular examples thereof are epoxylated soybean oils, epoxylated linseed oil, bis(2-ethylhexyl)-4,5-epoxycyclohexane-1,2-dicarboxylate (E-PS), epoxyoctyl stearate, epoxybutyl stearate and the like. E-PS is particularly preferable among them. The epoxy compound is preferable to be used in a range from 0.5 to 50 parts by weight per 100 parts by weight of the component (A).

The composition of the invention may contain a photocurable substance. Addition of the photocurable substance makes it possible to form a coating of the photocurable substance on the cured product surface and to improve the stickiness and weather resistance of the cured product. The photocurable substance is a compound causing chemical changes in the molecular structure within a very short time by light radiation and thereby causing changes in physical properties such as curing. This kind of compounds is known well in form of an organic monomer, an oligomer, a resin, a composition containing them, and many others. All kinds of commercialized products may be used. Typical examples thereof are unsaturated acrylic compounds, polyvinyl cinnamates, azido resins and the like. The unsaturated acrylic compounds may include monomers and oligomers having one or several acrylic or methacrylic unsaturated groups, and mixtures thereof; e.g. monomers and oligoesters with a molecular weight of 10,000 or lower, such as propylene (or butylene, or ethylene) glycol di(meth)acrylate and neopentyl glycol di(meth)acrylate, and the like. As more specific examples, there may be mentioned such special acrylates (difunctional) as ARONIX M-210, ARONIX M-215, ARONIX M-220, ARONIX M-233, ARONIX M-240, and ARONIX M-245; such trifunctional ones as ARONIX M-305, ARONIX M-309, ARONIX M-310, ARONIX M-315, ARONIX M-320, and ARONIX M-325; such polyfunctional ones as ARONIX M-400; and the like. Compounds containing an acrylic functional group are particularly preferable and compounds containing 3 or more functional groups on average in one molecule are more preferable. (All the above-mentioned ARONIX species are products of Toagosei Co., Ltd.)

Examples of the polyvinyl cinnamates are photosensitive resins having a cinnamoyl group as a photosensitive group and obtained by esterifying a polyvinyl alcohol with a cinnamic acid and many polyvinyl cinnamate derivatives as well. The azido resins are known as photosensitive resins having an azido group as a photosensitive group and in general, may include photosensitive rubber liquids obtained by adding a diazido compound as a photosensitizer, and further, detailed examples are found in "Kankosei Jushi (Photosensitive Resins)" (published March 17, 1972 by Insatsu Gakkai Shuppanbu, pages 93 ff, 106 ff, 117 ff). They may be used alone or as a mixture and if necessary, a sensitizer may be added. In the case where a sensitizer such as ketones and nitro compounds or a promoter such as amines is added, the effect is improved in some cases. The photocurable substance is preferably used in a range from 0.1 to 20 parts by weight and more preferably in a range from 0.5 to 10 parts by weight per 100 parts by weight of the component (A). If it is lower than 0.1 parts by weight, no effect to increase the weather resistance may be caused and if it exceeds 20 parts by weight, the cured product tends to become so hard to cause cracks.

The composition of the invention may contain an oxygen-curable substance. The oxygen-curable substance may include unsaturated compounds reactive on oxygen in the air and has function of forming a cured coating in the vicinity of the cured product surface by reaction with oxygen in the air and thereby preventing stickiness of the surface and adhesion of the dust and dirt to the cured product surface. Specific examples of the oxygen-curable substance are dry oils represented by tung oil and linseed oil and various kinds of alkyd resins obtained by modifying these compounds; acrylic polymers, epoxy resins, and silicon resins modified by dry oils; liquid polymers such as polymers of 1,2-polybutadiene, 1,4-polybutadiene, C5-C8 diene obtained by polymerization or copolymerization of diene compounds such as butadiene, chloroprene, isoprene, and 1,3-pentadiene, liquid copolymers such as NBR and SBR obtained by copolymerization of the diene compounds with a copolymerizable monomer such as acrylonitrile and stylene in a manner that the diene compounds form main components, various modified compounds of them (e.g. maleated derivatives, boiled oil-modified derivatives, and the like), and the like. They may be used alone or two or more of them may be used in combination. Tung oil and liquid diene polymers are particularly preferable among them. Further, combination use of a catalyst promoting the oxidation curing reaction or a metal drier may increase the effect in some cases. Examples of the catalyst and the metal drier are metal salts such as cobalt naphthenate, lead naphthenate, zirconium naphthenate, cobalt octylate, and zirconium octylate, amine compounds, and the like. The use amount of the oxygen-curable substance is in a range preferably from 0.1 to 20 parts by weight and more preferably from 0.5 to 10 parts by weight per 100 parts by weight of the component (A). If the use amount is lower than 0.1 parts by weight, the contamination improvement effect becomes insufficient and if it exceeds 20 parts by weight, the tensile property and the like of the cured product tends to be deteriorated. As described in Japanese Kokai Publication Hei-3-160053, the oxygen-curable substance may be used preferably in combination with the photocurable substance.

The composition of the invention may contain an antioxidant (anti-aging agent). If the antioxidant is used, the heat resistance of the cured product can be increased. Examples of the antioxidant are hindered phenol-type antioxidants, monophenol-type antioxidants, bisphenol-type antioxidants, and polyphenol-type antioxidants, and hinderd phenol-type antioxidants are particularly preferable. Similarly, usable examples thereof are hindered amine-type light stabilizers commercialized as TINUVIN 622LD, TINUVIN 144, CHIMASSORB 944LD, and CHIMASSORB 119FL (all manufactured by Ciba Specialty Chemicals), MARK LA-57, MARK LA-62, MARK LA-67, MARK LA-63, and MARK LA-68 (all manufactured by Adeka Argus Chemical Co., Ltd.), Sanol LS-770, Sanol LS-765, Sanol LS-292, Sanol LS-2626, Sanol LS-1114, and Sanol LS-744 (all manufactured by Sankyo Co., Ltd.). Specific examples of the antioxidant are also described in Japanese Kokai Publication Hei-4-283259 and Japanese Kokai Publication 9-194731. The use amount of the antioxidant is in a range preferably from 0.1 to 10 parts by weight and more preferably from 0.2 to 5 parts by weight per 100 parts by weight of the component (A).

The composition of the invention may contain a light stabilizer. If the light stabilizer is used, the photo-oxidation deterioration of the cured product can be prevented. Examples to be used as the light stabilizer may include benzotriazole compounds, hindered amine compounds, benzoate compounds and the like, and hindered amine compounds are particularly preferable. The use amount of the light stabilizer is in a range preferably from 0.1 to 10 parts by weight and more preferably from 0.2 to 5 parts by weight per 100 parts by weight of the component (A). Specific examples of the light stabilizer are also described in Japanese Kokai Publication Hei-9-194731.

In the case where the photocurable substance is added to the composition of the invention, particularly in the case where an unsaturated acrylic acid compound is added, it is preferable to use a tertiary amine-containing hindered amine-type light stabilizer as described in Japanese Kokai Publication Hei-5-70531 as the hindered amine-type light stabilizer in terms of the improvement of the storage stability of the composition. Examples of the tertiary amine-containing hindered amine-type light stabilizer are TINUVIN 622LD, TINUVIN 144, and CHIMASSORB 119FL (all manufactured by Ciba-Geigy of Japan); MARK LA-57, LA-62, LA-67, and LA-63 (all manufactured by Adeka Argus Chemical Co., Ltd.); Sanol LS-765, LS-292, LS-2626, LS-1114, and LS-744 (all manufactured by Sankyo Co., Ltd.); and the like stabilizers.

The composition of the invention may contain an ultraviolet absorber. Use of the ultraviolet absorber can increase the weather resistance of the surface of the cured product. Examples of the ultraviolet absorber may be benzophenone compounds, benzotriazole compounds, salicylate compounds, substituted tolyl compounds, metal chelate compounds and the like, and benzotriazole compounds are particularly preferable. The use amount of the ultraviolet absorber is preferably in a range from 0.1 to 10 parts by weight and more preferably from 0.2 to 5 parts by weight per 100 parts by weight of the component (A). It is preferable to use a phenol-type or hindered phenol-type antioxidant, a hindered amine-type light stabilizer, and a benzotriazole-type ultraviolet absorber in combination.

The composition of the invention may contain an epoxy resin. The composition that contains the epoxy resin is preferable to be used as an adhesive, particularly as an adhesive for exterior wall tiles. Examples of the epoxy resin are epichlorohydrin-bisphenol A epoxy resins, epichlorohydrin-bisphenol F epoxy resins, flame-retardant epoxy resins such as tetrabromobisphenol A glycidyl ether, novolak epoxy resins, hydrogenated bisphenol A epoxy resins, glycidyl ether epoxy resins of a bisphenol A propyleneoxide adduct, p-oxybenzoic acid glycidyl ether ester epoxy resins, m-aminophenol epoxy resins, diaminodiphenylmethane epoxy resins, urethane-modified epoxy resins, various kinds of alicyclic epoxy resins, N,N-diglycidylaniline, N,N-diglycidyl-o-toluidine, triglycidyl isocyanurate, polyalkylene glycol diglycidyl ether, glycidyl ether of polyhydric alcohols such as glycerin, hydantoin epoxy reins, epoxides of unsaturated polymers such as petroleum resins, and the like, however the epoxy resin is not limited to these examples and commonly used epoxy resins are all usable. Those having two or more epoxy groups in a molecule have high reactivity at the time of curing and make the cured product easy to form a three-dimensional mesh structure, and therefore they are preferable. More preferable examples thereof are bisphenol A epoxy resins, novolak epoxy resins and the like. The use ratio of these epoxy resins and the component (A) of the invention is preferably in a range from (100/1) to (1/100) on the basis of (A)/(epoxy resins) by weight. If the ratio (A)/(epoxy resins) is lower than 1/100, it becomes difficult to cause an effect of improving the impact strength and strong toughness of the epoxy resin cured product and if the ratio (A)/(epoxy resins) exceeds 100/1, the strength of the cured product may become insufficient. A preferable use ratio cannot be defined clearly since it depends on the uses of the resin curing composition, however in the case of improving impact resistance, flexibility, strong toughness, peel strength and the like of the epoxy resin cured product, the component (A) is preferably in a range from 1 to 100 parts by weight and more preferably from 5 to 100 parts by weight per 100 parts by weight of the epoxy resins. On the other hand, in the case of improving strength of the cured product of the invention, the epoxy resins are preferably used in a range from 1 to 200 parts by weight and more preferably from 5 to 100 parts by weight per 100 parts by weight of the component (A).

In the case where the epoxy resin is added, the composition of the invention may naturally contain a curing agent for curing the epoxy resin. Examples of the epoxy resin curing agent are not particularly limited and commonly used epoxy resin curing agents may be used. Specific examples thereof are primary and secondary amines such as triethylenetetramine, tetraethylenepentamine, diethylaminopropylamine, N-aminoethylpiperidine, m-xylylenediamine, m-phenylenediamine, diaminodiphenylmethane, diaminodiphenylsulfone, isophoronediamine, amine-terminated polyethers; tertiary amines such as 2,4,6-tris(dimethylaminomethyl)phenol, and tripropylamine and salts of these tertiary amines; polyamide resins; imidazoles; dicyanodiamides; boron trifluoride complex compounds; carboxylic anhydrides such as phthalic anhydride, hexahydrophthalic anhydride, tetrahydrophthalic anhydride, dodecinyl succinic anhydride, pyromellitic anhydride, and chlorendic anhydride; alcohols; phenols; carboxylic acids; diketone complexes of aluminum or zirconium; and the like compounds, however the epoxy resin is not limited to these examples and the curing agent is used alone or two or more of them are used in combination.

In the case of using the curing agent for the epoxy resin, the use amount is preferably in a range from 0.1 to 300 parts by weight per 100 parts by weight of the epoxy resin.

A ketimine may be used as the curing agent for the epoxy resin. The ketimine exists stably in water-free state, and is decomposed into a primary amine and a ketone by water and the produced primary amine is a curing agent for the epoxy resin curable at a room temperature. If the ketimine is used, the one-pack composition may be obtained. The ketimine can be obtained by condensation reaction of an amine compound and a carbonyl compound.

Synthesis of the ketimine may be carried out using a conventionally known amine compound and carbonyl compound and examples of the amine compound are diamines such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, p-phenylenediamine, and p,p'-biphenylenediamine; polyamines such as 1,2,3-triaminopropane, triaminobenzene, tris(2-aminoethyl)amine, and tetrakis(aminomethyl)methane; polyalkylene polyamines such as diethylenetriamine, triethylenetriamine, and tetraethylenepentamine; polyoxyalkylene polyamines; aminosilanes such as γ-aminopropyltriethoxysilane, N-(β-aminoethyl)-γ-aminopropyltrimethoxysilane, and N-(β-aminoethyl)-γ-aminopropylmethyldimethoxysilane; and the like. Examples of the carbonyl compound are aldehydes such as acetaldehyde, propionaldehyde, n-butylaldehyde, isobutylaldehyde, diethylacetaldehyde, glyoxal, and benzaldehyde; cyclic ketones such as cyclopentanone, trimethylcyclopentanone, cyclohexanone, and trimethylcyclohexanone; aliphatic ketones such as acetone, methyl ethyl ketone, methyl propyl ketone, methyl isopropyl ketone, methyl isobutyl ketone, diethyl ketone, dipropyl ketone, diisopropyl ketone, dibutyl ketone, and diisobutyl ketone; β-dicarbonyl compounds such as acetyl acetone, methyl acetoacetate, ethyl acetoacetate, dimethyl malonate, diethyl malonate, methyl ethyl malonate, and dibenzoylmethane; and the like.

In the case where an imino group exists in the ketimine, the imino group may be reacted with styrene oxide; glycidyl ethers such as butyl glycidyl ether and allyl glycidyl ether; glycidyl esters; and the like. The above-mentioned ketimines may be used alone or two or more of them may be used in combination. The use amount of the ketimine is preferably in a range from 1 to 100 parts by weight per 100 parts by weight of the epoxy resin and it differs depending on the types of the epoxy resin and ketimine.

The curable composition of the invention may contain a flame retardant, for example, phosphorus-type plasticizer such as ammonium polyphosphate and tricresyl phosphate, aluminum hydroxide, magnesium hydroxide, and thermally expansive graphite. The above-mentioned flame retardant may be used alone or two or more of them may be used in combination.

The flame retardant is preferably used in a range from 5 to 200 parts by weight and more preferably from 10 to 100 parts by weight per 100 parts by weight of the component (A).

The curable composition of the invention may contain various kinds of additives for adjusting the various physical properties of the curable composition or the cured product of the composition according to need. Examples of the additives are a curability adjustment agent, a radical inhibitor, a metal inactivation agent, an ozone deterioration-preventing agent, a phosphorus-type peroxide decomposing agent, a lubricant, a pigment, a foaming agent, a repellent for ants, anti-fungal agent and the like. These various additives may be used alone or two or more of them may be used in combination. Specific examples other than the examples of the additives described in this specification are described in Japanese Kokoku Publication Hei-4-69659, Japanese Kokoku Publication Hei-7-108928, Japanese Kokai Publication Sho-63-254149, Japanese Kokai Publication Sho-64-22904, Japanese Kokai Publication 2001-72854 and the like.

The curable composition of the invention may be produced as a one-pack formulation, which is to be cured by the moisture in the air after application, by compounding all the components/ingredients and tightly sealing in a container for storage, or as a two-pack type formulation by separately mixing, as curing agents, components such as a curing catalyst, a filler, a plasticizer, and water and mixing the mixture with a polymer composition together prior to use. In terms of the workability, the one-pack is preferable.

In the case where the curable composition is one-pack, since all of the components are previously mixed, it is preferable to previously dehydrate and dry the components containing water prior to use or to carry out dehydration by vacuum etc. during the components are kneaded. In the case where the curable composition is two-pack type, gelation hardly occurs if a slight amount of water is contained in the component mixture, since there is no need to add a curing catalyst to the base components containing the polymer having a silicon-containing group capable of crosslinking by siloxane bond formation. However, in the case where long term storage stability is required, it is preferable to carry out dehydration and drying. In the case where the composition is a powder or the like solid, the dehydration and drying method is preferably heat drying and in the case where it is liquid, vacuum dehydration or dehydration using a synthetic zeolite, activated alumina, silica gel, burnt lime, magnesium oxide or the like is preferable. Alternatively, a small amount of an isocyanate compound may be added to cause reaction of the isocyanate group and water for dehydration. Further, an oxazolidine compound such as 3-ethyl-2-methyl-2-(3-methylbutyl)-1,3-oxazolidine may be added to cause reaction with water for dehydration. In addition to the above-mentioned dehydration and drying methods, the storage stability is further improved by adding a lower alcohol such as methanol and ethanol; and an alkoxysilane such as n-propyltrimethoxysilane, vinyltrimethoxysilane, vinylmethyldimethoxysilane, methyl silicate, ethyl silicate, γ-mercaptopropylmethyldimethoxysilane, γ-mercaptopropylmethyldiethoxysilane, and γ-glycidoxypropyltrimethoxysilane.

The use amount of a dehydration agent, particularly a silicon compound reactive with water such as vinyltrimethoxysilane is preferably in a range from 0.1 to 20 parts by weight and more preferably from 0.5 to 10 parts by weight per 100 parts by weight of the component (A).

The method for producing the curable composition of the invention is not particularly limited and a common method may be employed which involves, for example, formulating the above-mentioned components, kneading the components by a mixer, a roll, a kneader or the like at an ambient temperature or under heating condition; or dissolving the components by adding a small amount of a proper solvent for mixing.

When the curable composition of the invention is exposed to the atmosphere, the composition forms a three-dimensional mesh structure by reaction with moisture and then is cured into a solid having rubber-like elasticity.

### (Effect of the invention)

The curable composition according to the invention is excellent in curability and adhesion in spite of the use of a non-organotin catalyst.

### BEST MODE FOR CARRYING OUT THE INVENTION

Next, the invention will be described more in detail with reference to Examples and Comparative Examples, however the invention should not be limited to these examples.

### (Synthesis Example 1)

Using a mixture of polyoxypropylene diol with a molecular weight of about 2,000 and polyoxypropylene triol with a molecular weight of about 3,000 at 1/1 in weight ratio as an initiator, propylene oxide was polymerized by a zinc hexacyanocobaltate glyme complex catalyst to obtain polypropylene oxide with a number average molecular weight of about 19,000 (measured by using HLC-8120 GPC manufactured by Tosoh Corporation as a solution transporting system; TSK-GEL H column manufactured by Tosoh Corporation as a column; and THF as a solvent: the molecular weight was determined on the basis of conversion into polystyrene). Successively, the terminal hydroxyl groups of the hydroxyl-terminated polypropylene oxide were converted into allyl groups by adding a methanol solution of NaOMe in 1.2 times much equivalent to the hydroxyl groups, removing methanol, and then adding allyl chloride. Accordingly, propylene oxide with a number average molecular weight of about 19,000 and terminated with allyl groups was obtained.

After 300 parts by weight of n-hexane and 300 parts by weight of water were added to and mixed, with stirring, with 100 parts by weight of the crude allyl-terminated polypropylene oxide thus obtained, water was removed by centrifugation. Then, 300 parts by weight of water was added to the obtained hexane solution with stirring, water was removed again by centrifugation and successively, hexane was removed by vacuum evaporation in order to obtain a purified allyl-terminated polypropylene oxide (hereinafter, referred to as an allyl polymer). Using 150 ppm of an isopropanol solution of a platinum-vinylsiloxane complex with 3% by weight of platinum content as a catalyst, 100 parts by weight of the obtained allyl polymer was reacted with 1.35 parts by weight of methyldimethoxysilane at 90°C for 5 hours to obtain a methyldimethoxysilyl-terminated polypropylene oxide (A-1). It was found by ¹H-NMR measurement (measured by using NM-LA 400 manufactured by Nippon Electric Co., Ltd., and in CDCl₃ solvent that there were about 1.7 terminal methyldimethoxysilyl groups on average per one molecule.

### (Synthesis Example 2)

Using hydroxyl-terminated polypropylene oxide with a number average molecular weight of about 25,500 as obtained by polymerizing propylene oxide in the presence of a zinc hexacyanocobaltate glyme complex catalyst using polyoxypropylene glycol with a molecular weight of about 2,000 as an initiator, the same procedure as in Synthesis Example 1 was followed to give allyl-terminated polypropylene oxide. This allyl-terminated polypropylene oxide was reacted with 1.1 parts by weight of trimethoxysilane in the same manner as in Synthesis Example 1 to give a polyoxypropylene polymer (A-2) containing, on an average, 1.3 terminal trimethoxysilyl groups.

### (Synthesis Example 3)

Using hydroxyl-terminated polypropylene oxide with a number average molecular weight of about 25,500 as obtained by polymerizing propylene oxide in the presence of a zinc hexacyanocobaltate glyme complex catalyst using polyoxypropylene glycol with a molecular weight of about 2,000 as an initiator, the same procedure as in Synthesis Example 1 was followed to give allyl-terminated polypropylene oxide. This allyl-terminated polypropylene oxide was reacted with 0.93 part by weight of methyldimethoxysilane in the same manner as in Synthesis Example 1 to give a polyoxypropylene polymer (A-3) containing, on an average, 1.3 terminal methyldimethoxysilyl groups.

### (Examples 1 and 2 and Comparative Examples 1 to 5)

The polymer (A-1 or A-2) obtained in Synthesis Example 1 or 2 as the component (A), chloromethyltrimethoxysilane (product of Shin-Etsu Chemical, LS-465), fluorotriethoxysilane (product of Gelest, Inc., SIT8180.0) or vinyltrimethoxysilane (product of Dow Corning Toray, A-171) as the component (C) and neodecanoic acid (product of Japan Epoxy Resins, Versatic 10), 3-diethylaminopropylamine (product of Wako Pure Chemical Industries) or dibutyltin bisacetylacetonate (product of Nitto Kasei, Neostann U-220) as the component (B) were mixed together according to the formulation given in Table 1 or Table 2 and, after thorough kneading, the resulting composition was allowed to stand under constant-temperature and constant-humidity conditions of 25°C and 50%. This point of time was regarded as the curing start time, and the curing time or skinning time, namely the period required for the composition to become no longer sticky to a spatula brought into contact with the composition, was measured. The results are shown in Table 1 and Table 2.

**Table 1**

| Composition (parts by weight) | | Example | Comparative Example | | | |
|---|---|---|---|---|---|---|
| | | 1 | 1 | 2 | 3 | 4 |
| Component (A) | A-1 | 100 | 100 | 100 | 100 | 100 |
| Component (C) | Chbromethyltrimethoxysilane | 2.3 | | | | 2.3 |
| Vinylsilane | A-171 | | | 2 | | |
| Component (B) | Versatic 10 | 2.5 | 2.5 | 2.5 | | |
| Amine compound | 3-Diethylaminopropylamine | 0.5 | 0.5 | 0.5 | | |
| Organotin compound | Neostann U -220 | | | | 0.5 | 0.5 |
| Curability | Skinning time (min) | 15 | 35 | 27 | 18 | 70 |

**Table 2**

| Composition (parts by weight) | | Example | Comparative Example |
|---|---|---|---|
| | | 2 | 5 |
| Component (A) | A-2 | 100 | 100 |
| Component (C) | Fluorotriethoxysilane | 0.5 | |
| Component (B) | Versatic 10 | 2.5 | 2.5 |
| Amine compound | 3-Diethylaminopropylamine | 0.5 | 0.5 |
| Curability | Skinning time (min) | 4 | 12 |

Referring to Table 1, the effect of the addition of a component (C) was investigated in Example 1 in comparison with Comparative Examples 1 and 2. According to the results obtained, when the component (C) was used as in Example 1, the time required for curing was more than halved as compared with Comparative Example 1 where no component (C) was used, demonstrating a marked curability enhancing effect. As shown in Comparative Example 2, it is seen that the use of a vinylsilane in lieu of the component (C) did not much contribute to the enhancement of curability.

In Comparative Examples 3 and 4 in Table 1, the effect of the addition of the component (C), with the use of an organotin compound, a common silanol condensation catalyst, was studied. According to the results obtained, in the case where the organotin compound is used, the curing rate was not improved but was rather reduced by the addition of the component (C). Thus, it can be understood that the curability improving effect achievable in accordance with the invention is a unique effect producible only when the components (B) and (C) are used in combination.

Referring to Table 2, the results of Example 2 and Comparative Example 5, in which another component (A) was used, reveal that there was a marked difference in curing time between the use and the non-use of the component (C), indicating that the curable composition according to the invention is superior in curability in this case as well.

### (Example 3 and Comparative Example 6)

A portion (100 parts by weight) of the polymers (A-3) obtained in Synthesis Example 3 as the component (A), 55 parts by weight of polypropyleneglycol (product of New Japan Chemical Co., Ltd.; Sansocizer DIDP), 120 parts by weight of surface-treated colloidal calcium carbonate (product of Shiraishi Kogyo; Hakuenka CCR), 20 parts by weight of titanium oxide (product of Ishihara Sangyo; Tipaque R-820), 2 parts by weight of a thixotropic agent (product of Kusumoto Chemicals; Disparlon 6500), 1 part by weight of an ultraviolet absorber (product of Ciba Specialty Chemicals; Tinuvin 327), 1 part by weight of a light stabilizer (product of Sankyo; Sanol LS 770), 2.3 parts by weight of a (C) component chloromethyltrimethoxysilane (product of Shin-Etsu Chemical, LS-465) or 2 parts by weight of vinyltrimethoxysilane (product of Dow Corning Toray; A-171) and 3 parts by weight of N-(β-aminoethyl)-γ-aminopropyltrimethoxysilane (product of Dow Corning Toray; A-1120) were kneaded together under reduced pressure conditions (0.2 mmHg; 27 Pa) at 120°C for 2 hours. Finally, (B) component neodecanoic acid (product of Japan Epoxy Resins; Versatic 10) and 3-diethylaminopropylamine (product of Wako Pure Chemical Industries) were added according to the formulation given in Table 3, followed by mixing up. Each composition thus prepared was placed in a moisture-proof container (cartridge), which was then hermetically sealed. Thus was obtained a one-pack curable composition. The one-pack curable compositions prepared in this manner were evaluated for curability (skinning time) and adhesion in the following manner.

### (Curability test)

Each curable composition was extruded out of the cartridge and filled into a mold with a thickness of about 5 mm using a spatula, and then the surface of the composition was leveled to be flat. This moment was defined as the curing starting time. The surface was touched with the spatula and the moment when the mixture was not stuck to the spatula any more was determined as the skinning time. The skinning time was determined under the condition at 23°C and 50% RH. The results are shown in Table 3.

### (adhesion test)

Each curable composition was extruded out of the cartridge in a manner that the composition was closely stuck to each adherend (stainless steel, polyvinyl chloride resin, polyvinyl chloride-coated steel sheet) to produce specimens. After the produced specimens were aged at 23°C for 7 days, a 90-degree hand peeling test was carried out for adhesion evaluation. Evaluation was carried out on the basis of failure modes as follows: the state where the cohesive failure ratio was from 50% or higher to 100% was determined as Excellent, and the state where it was from 0% to lower than 50% was determined as Poor. The results are shown in Table 3.

**Table 3**

| Composition (parts by weight) | | Example | Comparative Example |
|---|---|---|---|
| | | 3 | 6 |
| Component (A) | A-3 | 100 | 100 |
| Plasticizer | ActocolP23 | 55 | 55 |
| Filler | Hakuenka CCR | 120 | 120 |
| | Tipaque R-820 | 20 | 20 |
| Thixotropic agent | Disparlon 6500 | 2 | 2 |
| Ultraviolet absorber | Tinuvin 327 | 1 | 1 |
| Light stabilizer | SanolLS 770 | 1 | 1 |
| Adhesion promoter | A-1120 | 3 | 3 |
| Component (C) | Chloromethyltrimethoxysilane | 2.3 | |
| Vinylsilane | A-171 | | 2 |
| Component (B) | Versatic 10 | 2.5 | 2.5 |
| Amine compound | 3-Diethylaminopropylamine | 0.5 | 0.5 |
| Curability | Skinning time (min) | 140 | 250 |
| Adhesiveness | Stainless steel | Excellent | Poor |
| | Polyvinylchloride resin | Excellent | Poor |
| | Polyvinylchloride-coated steel sheet | Excellent | Poor |

As shown in Table 3, marked acceleration of curing and a marked improvement in adhesion as resulting from the addition of the component (C) could be observed when the component (B) was used as the curing catalyst.

### INDUSTRIAL APPLICABILITY

The curable composition of the invention is usable for pressure sensitive adhesives, sealants for buildings and constructions, ships, automobiles and roads etc., adhesives, molding agents, materials for vibration absorption, damping materials, materials for noise reduction, foamed materials, paints, spraying materials and the like. The curable composition of the invention is more preferable to be used as sealants or adhesives among them since the cured product obtained by curing the composition is excellent in flexibility and adhesion.

Further, the curable composition is usable for various uses, for example electric and electronic parts such as sealants for rear faces of solar cells; electrical insulating materials such as insulating coating materials for electric wires and cables; elastic adhesives, contact adhesives, spraying sealants, crack repairing materials, adhesives for tiles, powdery coating materials, casting materials, rubber materials for medical use, pressure sensitive adhesives for medical use, sealants for medical appliances, packaging materials for food, joint sealants for exterior materials such as a siding board, coating materials, primers, conductive materials for shielding electromagnetic wave, heat conductive materials, hot melt materials, electric and electronic potting agents, films, gaskets, various kinds of molding materials, rustproof and waterproof sealants for end faces (cut sections) of net glass or laminated glass, liquid sealants used in automobile parts, electric parts, various kinds of machine parts and the like, and the like. Further, since the curable composition can be closely stuck to a wide range of substrates such as glass, ceramics, wood, metals, and resin molded products by itself or with assist of a primer, it is also usable as various types of hermetically sealing compositions and adhesive compositions. Since the curable composition of the invention are excellent in recovery, durability and creep resistance, they are particularly preferred when they are used as adhesives for interior panels, adhesives for exterior panels, adhesives for tiles, adhesives for stone material lining, adhesives for ceiling finishing, adhesives for floor finishing, adhesives for wall finishing, adhesives for vehicle panels, adhesives for assembly of electric apparatus/electronic apparatus/precision apparatus, sealants for direct glazing, sealants for pair glass, sealants for SSG process, sealants for working joints of buildings and constructions, and the like.

## Claims

1. A curable composition
which comprises
(A) an organic polymer containing a silicon-containing group capable of crosslinking by siloxane bond formation,
(B) a carboxylic acid metal salt (b1) and/or a carboxylic acid (b2) and
(C) a halogen atom-containing silicon compound represented by the general formula (1):
R¹_{4-a-b}YₐSi(OR²)_{b} (1)
(wherein 4-a-b R¹s each independently is a substituted or unsubstituted hydrocarbon group containing 1 to 20 carbon atoms or a triorganosiloxy group represented by (R")₃SiO- (in which three R"s each independently is a substituted or unsubstituted hydrocarbon group containing 1 to 20 carbon atoms); a Ys each independently is a halogen atom or an alkyl group containing 1 to 20 carbons atoms and having a halogen atom on the carbon atom in the position α or β to the silicon atom; b R²s each independently is a hydrogen atom or a substituted or unsubstituted hydrocarbon group containing 1 to 20 carbon atoms; a is 1, 2 or 3, b is 1, 2 or 3, and a+b is 2, 3 or 4) and/or a partial hydrolysis condensate derived from a halogen atom-containing silicon compound represented by the general formula (1).

2. The curable composition according to Claim 1
wherein the component (B) contains either of the carboxylic acid metal salt (b1) or the carboxylic acid (b2).

3. The curable composition according to Claim 1
wherein the component (B) contains both of the carboxylic acid metal salt (b1) and the carboxylic acid (b2).

4. The curable composition according to any one of Claims 1 to 3
wherein the carboxylic acid metal salt (b1) is a metal salt of a carboxylic acid of which the carbon atom adjacent to the carbonyl group composing a carboxylate ion is a tertiary carbon or a quaternary carbon.

5. The curable composition according to any one of Claims 1 to 4
wherein the carboxylic acid (b2) is the carboxylic acid of which the carbon atom adjacent to the carbonyl group composing an acid group is a tertiary carbon or a quaternary carbon.

6. The curable composition according to any one of Claims 1 to 5
wherein the main chain skeleton of the organic polymer (A) is a polyoxyalkylene polymer.

7. The curable composition according to any one of Claims 1 to 6
which further contains an amine compound as the component (D).

## Patentansprüche

1. Vernetzbare Zusammensetzung, die umfasst:
(A) ein organisches Polymer, das eine Silizium enthaltende Gruppe, die zur Vernetzung durch Siloxanbindungsbildung imstande ist, enthält,
(B) ein Carbonsäuremetallsalz (b1) und/oder eine Carbonsäure (b2) und
(C) eine Halogenatom enthaltende Siliziumverbindung, dargestellt durch die allgemeine Formel (1):
R¹_{4-a-b}Yₐ Si(OR²)_{b} (1)
(wobei jedes 4-a-b R¹ unabhängig eine substituierte oder unsubstituierte Kohlenwasserstoffgruppe mit 1 bis 20 Kohlenstoffatomen oder eine Triorganosiloxygruppe, dargestellt durch (R")₃SiO- (in der jedes der drei R" unabhängig eine substituierte oder unsubstituierte Kohlenwasserstoffgruppe mit 1 bis 20 Kohlenstoffatomen ist) ist; jedes a Y unabhängig ein Halogenatom oder eine Alkylgruppe mit 1 bis 20 Kohlenstoffatomen und mit einem Halogenatom an dem Kohlenstoffatom in der α- oder β-Position zu dem Siliziumatom ist; jedes b R² unabhängig ein Wasserstoffatom oder eine substituierte oder unsubstituierte Kohlenwasserstoffgruppe mit 1 bis 20 Kohlenstoffatomen ist; a 1, 2 oder 3 ist, b 1, 2 oder 3 ist und a+b 2, 3 oder 4 ist) und/oder ein partielles Hydrolysekondensat, das von der Halogenatom enthaltenden Siliziumverbindung, dargestellt durch die allgemeine Formel (1), abgeleitet ist.

2. Vernetzbare Zusammensetzung gemäß Anspruch 1, wobei der Bestandteil (B) entweder das Carbonsäuremetallsalz (b1) oder die Carbonsäure (b2) enthält.

3. Vernetzbare Zusammensetzung gemäß Anspruch 1, wobei der Bestandteil (B) sowohl das Carbonsäuremetallsalz (b1) als auch die Carbonsäure (b2) enthält.

4. Vernetzbare Zusammensetzung gemäß einem der Ansprüche 1 bis 3, wobei das Carbonsäuremetallsalz (b1) ein Metallsalz einer Carbonsäure ist, bei der das Kohlenstoffatom neben der Carbonylgruppe, die das Carboxylation ausmacht, ein tertiärer Kohlenstoff oder ein quartärer Kohlenstoff ist.

5. Vernetzbare Zusammensetzung gemäß einem der Ansprüche 1 bis 4, wobei die Carbonsäure (b2) eine Carbonsäure ist, bei der das Kohlenstoffatom neben der Carbonylgruppe, die die Säuregruppe ausmacht, ein tertiärer Kohlenstoff oder ein quartärer Kohlenstoff ist.

6. Vernetzbare Zusammensetzung gemäß einem der Ansprüche 1 bis 5, wobei das Hauptkettenskelett des organischen Polymers (A) ein Polyoxyalkylenpolymer ist.

7. Vernetzbare Zusammensetzung gemäß einem der Ansprüche 1 bis 6, welche weiterhin eine Aminverbindung als Bestandteil (D) enthält.

## Revendications

1. Composition durcissable
qui comprend
(A) un polymère organique contenant un groupe contenant du silicium capable de réticulation par formation d'une liaison de siloxane,
(B) un sel métallique d'acide carboxylique (b1) et/ou un acide carboxylique (b2) et
(C) un composé de silicium contenant un atome d'halogène représenté par la formule générale (1) :
R¹_{4-a-b}YₐSi (OR²)_{b} (1)
(dans laquelle 4-a-b R¹ est chacun indépendamment un groupe hydrocarbure substitué ou non substitué contenant 1 à 20 atomes de carbone ou un groupe triorganosiloxy représenté par (R")₃SiO- (dans lequel trois R" est chacun indépendamment un groupe hydrocarbure substitué ou non substitué contenant 1 à 20 atomes de carbone) ; a Y est chacun indépendamment un atome d'halogène ou un groupe alkyle contenant 1 à 20 atomes de carbone et ayant un atome d'halogène sur l'atome de carbone dans la position α ou β sur l'atome de silicium ; b R² est chacun indépendamment un atome d'hydrogène ou un groupe hydrocarbure substitué ou non substitué contenant 1 à 20 atomes de carbone ; a est 1, 2 ou 3, b est 1, 2 ou 3 et a+b est 2, 3 ou 4)
et/ou un condensat d'hydrolyse partiel obtenu à partir d'un composé de silicium contenant un atome d'halogène représenté par la formule générale (1).

2. Composition durcissable selon la revendication 1,
dans laquelle le composant (B) contient soit le sel métallique d'acide carboxylique (b1) soit l'acide carboxylique (b2).

3. Composition durcissable selon la revendication 1,
dans laquelle le composant (B) contient tant le sel métallique d'acide carboxylique (b1) que l'acide carboxylique (b2).

4. Composition durcissable selon l'une quelconque des revendications 1 à 3,
dans laquelle le sel métallique d'acide carboxylique (b1) est un sel métallique d'un acide carboxylique dont l'atome de carbone adjacent au groupe carbonyle composant un ion de carboxylate est un carbone tertiaire ou un carbone quaternaire.

5. Composition durcissable selon l'une quelconque des revendications 1 à 4,
dans laquelle l'acide carboxylique (b2) est l'acide carboxylique dont l'atome de carbone adjacent au groupe carbonyle composant un groupe acide est un carbone tertiaire ou un carbone quaternaire.

6. Composition durcissable selon l'une quelconque des revendications 1 à 5,
dans laquelle le squelette de chaîne principale du polymère organique (A) est un polymère de polyoxyalkylène.

7. Composition durcissable selon l'une quelconque des revendications 1 à 6,
qui contient en outre un composé d'amine en tant que composant (D).
